# EUROPÄISCHE PATENTSCHRIFT

(11) **EP 3 433 002 B1**
(45) Veröffentlichungstag und Bekanntmachung des Hinweises auf die Patenterteilung: **01.04.2020**
(21) Anmeldenummer: 17709012.3
(22) Anmeldetag: 23.02.2017
(51) Int. Cl.: B01D 46/00, B01D 46/02, B01D 46/44

(54) **ERKENNUNG VON SCHLAUCHDEFEKTEN BEI FILTERSCHLÄUCHEN**
DETECTION OF DEFECTS IN FILTER HOSES
RECONNAISSANCE DE DEFAUTS DE TUYAUX DANS DES MANCHONS FILTRANTS

(30) Priorität: 21.03.2016 EP 16161412
(43) Veröffentlichungstag der Anmeldung: 30.01.2019
(73) Patentinhaber: Primetals Technologies Austria GmbH, 4031 Linz (AT)
(72) Erfinder: FISCHER, Paul, 4040 Linz (AT); KUEHAS, Thomas, 4225 Luftenberg (AT); ROHRHOFER, Andreas, 4020 Linz (AT); AUFREITER, Philipp, 4020 Linz (AT); MAYRHOFER, Anna, 4722 Peuerbach (AT); WEINZINGER, Michael, 4501 Neuhofen a. d. Krems (AT)
(74) Vertreter: Metals@Linz
(86) Internationale Anmeldenummer: PCT/EP2017/054150
(87) Internationale Veröffentlichungsnummer: WO 2017/162394

(56) Entgegenhaltungen:
- WO-A1-94/12264
- US-A- 4 304 492
- US-A- 5 346 533

## Beschreibung

Die vorliegende Erfindung geht aus von einem Überwachungsverfahren für eine Filtereinrichtung,
- wobei der Filtereinrichtung über einen Zuluftkanal ein mit Partikeln belastetes Abgas zugeführt wird, das Abgas in der Filtereinrichtung von den Partikeln befreit wird und das von den Partikeln befreite Abgas von der Filtereinrichtung über einen Abluftkanal abgegeben wird,
- wobei das Befreien eines ersten Teils des Abgases von den Partikeln in einer Mehrzahl von ersten Filtergruppen der Filtereinrichtung erfolgt, die jeweils eine Anzahl an Filterschläuchen aufweisen,
- wobei in einem Normalbetrieb der jeweiligen ersten Filtergruppe das Abgas an einer Zuluftseite in die Filterschläuche der jeweiligen ersten Filtergruppe eintritt und an einer Abluftseite aus den Filterschläuchen der jeweiligen ersten Filtergruppe austritt, so dass die Partikel sich als Filterkuchen an der Zuluftseite der Filterschläuche der jeweiligen ersten Filtergruppe anlagern,
- wobei in einem Reinigungsbetrieb der jeweiligen ersten Filtergruppe die Filterschläuche der jeweiligen ersten Filtergruppe an der Abluftseite über ein der jeweiligen ersten Filtergruppe zugeordnetes erstes Ventil mit einem Reinigungsgas beaufschlagt werden, so dass der an der Zuluftseite der Filterschläuche der jeweiligen ersten Filtergruppe angelagerte Filterkuchen sich von der Zuluftseite der Filterschläuche der jeweiligen ersten Filtergruppe löst.

Die vorliegende Erfindung geht weiterhin aus von einem Computerprogramm, das Maschinencode umfasst, der von einer Überwachungseinrichtung für eine Filtereinrichtung abarbeitbar ist,
- wobei der Filtereinrichtung über einen Zuluftkanal ein mit Partikeln belastetes Abgas zugeführt wird, das Abgas in der Filtereinrichtung von den Partikeln befreit wird und das von den Partikeln befreite Abgas von der Filtereinrichtung über einen Abluftkanal abgegeben wird,
- wobei das Befreien eines ersten Teils des Abgases von den Partikeln in einer Mehrzahl von ersten Filtergruppen der Filtereinrichtung erfolgt, die jeweils eine Anzahl an Filterschläuchen aufweisen,
- wobei in einem Normalbetrieb der jeweiligen ersten Filtergruppe das Abgas an einer Zuluftseite in die Filterschläuche der jeweiligen ersten Filtergruppe eintritt und an einer Abluftseite aus den Filterschläuchen der jeweiligen ersten Filtergruppe austritt, so dass die Partikel sich als Filterkuchen an der Zuluftseite der Filterschläuche der jeweiligen ersten Filtergruppe anlagern,
- wobei in einem Reinigungsbetrieb der jeweiligen ersten Filtergruppe die Filterschläuche der jeweiligen ersten Filtergruppe an der Abluftseite über ein der jeweiligen ersten Filtergruppe zugeordnetes erstes Ventil mit einem Reinigungsgas beaufschlagt werden, so dass der an der Zuluftseite der Filterschläuche der jeweiligen ersten Filtergruppe angelagerte Filterkuchen sich von der Zuluftseite der Filterschläuche der jeweiligen ersten Filtergruppe löst.

Die vorliegende Erfindung geht weiterhin aus von einer Überwachungseinrichtung für eine Filtereinrichtung, wobei die Überwachungseinrichtung mit einem derartigen Computerprogramm programmiert ist.

Die vorliegende Erfindung geht weiterhin aus von einer Filtereinrichtung, in der ein mit Partikeln belastetes Abgas von den Partikeln befreit wird,
- wobei der Filtereinrichtung einen Zuluftkanal aufweist, über den das mit Partikeln belastete Abgas der Filtereinrichtung zugeführt wird, und einen Abluftkanal aufweist, über den das von den Partikeln befreite Abgas von der Filtereinrichtung abgegeben wird,
- wobei die Filtereinrichtung eine Mehrzahl von ersten Filtergruppen aufweist, in denen das Befreien eines ersten Teils des Abgases von den Partikeln erfolgt, wobei die ersten Filtergruppen jeweils eine Anzahl an Filterschläuchen aufweisen,
- wobei die Filterschläuche jeweils eine Zuluftseite und eine Abluftseite aufweisen, so dass in einem Normalbetrieb der jeweiligen ersten Filtergruppe das Abgas an der Zuluftseite in die Filterschläuche der jeweiligen ersten Filtergruppe eintritt und an der Abluftseite aus den Filterschläuchen der jeweiligen ersten Filtergruppe austritt und die Partikel sich als Filterkuchen an der Zuluftseite der Filterschläuche der jeweiligen ersten Filtergruppe anlagern,
- wobei den ersten Filtergruppen jeweils ein erstes Ventil zugeordnet ist, über das in einem Reinigungsbetrieb der jeweiligen ersten Filtergruppe die Filterschläuche der jeweiligen ersten Filtergruppe an der Abluftseite mit einem Reinigungsgas beaufschlagt werden, so dass der an der Zuluftseite der Filterschläuche der jeweiligen ersten Filtergruppe angelagerte Filterkuchen sich von der Zuluftseite der Filterschläuche der jeweiligen ersten Filtergruppe löst.

Die genannten Gegenstände sind allgemein bekannt. Rein beispielhaft wird auf die WO 2015/007 583 A1 verwiesen.

Bei vielen industriellen Prozessen fallen mit Partikeln - insbesondere Staub - belastete Abgase an. Beispiele derartiger industrieller Prozesse sind die Stahlherstellung gemäß dem LD- oder dem AOD-Verfahren, das Einschmelzen von Schrott in einem Elektrolichtbogenofen, Sinterprozesse und andere mehr. Für die Reinigung des Abgases derartiger und anderer industrieller Prozesse werden oftmals Trockenschlauchfilter verwendet. Diese Filter dienen der Abscheidung von Staub bzw. allgemein von im Abgas enthaltenen Partikeln.

Die Filterschläuche müssen von Zeit zu Zeit vom Filterkuchen befreit werden. Dies erfolgt üblicherweise gemäß dem Druckstoßverfahren (Jet-pulse-Abreinigung). In diesem Fall werden die Filterschläuche im Reinigungsbetrieb kurzzeitig entgegen der normalen Strömungsrichtung mit einem Druckluftstoß beaufschlagt. Dadurch blähen sich die Filterschläuche auf, so dass der Filterkuchen von den Filterschläuchen abplatzt oder sich anderweitig von den Filterschläuchen löst. Der Filterkuchen sammelt sich in einem Sammelraum an, von dem aus er über entsprechende Fördereinrichtungen abtransportiert wird.

Die Filtereinrichtung weist oftmals viele Filterschläuche auf, manchmal mehrere 1000 Filterschläuche. Die Abreinigung der Filterschläuche erfolgt gruppenweise. Hierzu ist jede Gruppe von Filterschläuchen (Filtergruppe) über ein jeweiliges Ventil mit einem Druckluftbehälter oder dergleichen verbunden. In der Regel sind mehrere Druckluftbehälter vorhanden, die jeweils mit mehreren Ventilen verbunden sind. Die über denselben Druckluftbehälter mit Reinigungsgas beaufschlagten Filtergruppen bilden je ein Filtersegment.

Die Filterleistung wird durch den verbleibenden Anteil an Partikeln nach dem Filtern definiert. Zu Beginn der Filterung weisen die Filterschläuche in der Regel eine sehr gute Filterwirkung auf. Die Filterwirkung kann jedoch durch verschiedene Einflüsse reduziert werden oder sogar völlig unterbleiben. Mögliche Ursachen sind Risse durch mechanische Beanspruchung, Löcher - insbesondere durch Funken oder glühenden Staub verursachte Brandlöcher - und allgemeine Alterung.

Verliert auch nur ein einziger Filterschlauch seine Filterwirkung vollständig, ist die Filterwirkung der gesamten Filtereinrichtung in der Regel so stark beeinträchtigt, dass die gesetzlich vorgeschriebenen Umweltauflagen nicht mehr erfüllt werden können. In derartigen Fällen muss der Primärprozess, bei dem das mit Partikeln belastete Abgas anfällt, unterbrochen werden. Dies stellt selbstverständlich einen erheblichen Nachteil dar.

Wenn ein Filterschlauch seine Wirkung völlig verliert, ist dies in der Regel relativ einfach zu erkennen. Insbesondere kann eine visuelle Prüfung der Staubablagerungen erfolgen, können zu hohe Belastungswerte im gereinigten Abgas ermittelt werden und anderes mehr. Wenn sich die Filterleistung jedoch nach und nach nur graduell verschlechtert, kann dies oftmals nicht oder zumindest nicht rechtzeitig vor einem vollständigen Ausfall des betreffenden Filterschlauchs erkannt werden. Die Betreiber derartiger Filteranlagen bzw. der zu Grunde liegenden industriellen technischen Prozesse stehen daher vor dem Problem, dass sie oftmals im Falle einer unzureichenden Filterwirkung den Ursprung der unzureichenden Filterwirkung nicht oder zumindest nicht einfach ausmachen können. Die Fehlersuche ist insbesondere durch die mechanisch-konstruktive Größe der Filtereinrichtung und die Anzahl an Filterschläuchen oftmals sehr aufwändig.

Im Stand der Technik werden oftmals vorsorglich nach auf Erfahrungswerten beruhenden Intervallen alle Filterschläuche auf einmal ausgetauscht. Dies ist - insbesondere aufgrund der hohen Anzahl von Filterschläuchen - eine sehr kostspielige und auch zeitintensive Angelegenheit. Weiterhin ist bekannt, die Filterschläuche von Zeit zu Zeit - insbesondere während Betriebspausen des zu Grunde liegenden industriellen technischen Prozesses - optisch zu überprüfen. Eine derartige Überprüfung ist zum einen zeitlich sehr aufwändig und zum anderen prinzipbedingt nur während Betriebspausen der Filtereinrichtung möglich.

Es ist weiterhin bekannt, die Ventile zu überwachen. Diese Überwachung kann jedoch lediglich eine Information über das Funktionieren der Ventile liefern. Eine Aussage über den Zustand der Filterschläuche selbst ist nicht möglich.

Bei relativ kleinen Filtersystemen (bis ca. 20 Ventile) wird oftmals mittels einer im Abluftkanal angeordneten Sensoreinrichtung die Belastung des Abgases mit Partikeln erfasst und für eine Überwachung der Filterschläuche verwendet. Insbesondere führt jede Abreinigung eines Filterschlauchs zu einem markanten Ausschlag der Belastung. Bei einem zu großen Ausschlag kann dies zu einer Meldung führen, dass mindestens einer der von dem jeweiligen Ventil mit dem Reinigungsgas beaufschlagten Filterschläuche defekt ist. Derartige Vorgehensweisen sind beispielsweise aus der WO 94/12264 A1, US 5 346 533 A, US5346533 und US4304492 bekannt. Insbesondere die WO-Schrift offenbart zusätzlich zu den oben stehenden Merkmalen auch,
- dass im Abluftkanal eine Sensoreinrichtung angeordnet ist, mittels derer eine durch den Reinigungsbetrieb der jeweiligen ersten Filtergruppe bewirkte Belastung des Abgases mit Partikeln erfasst wird, und
- dass eine Überwachungseinrichtung vorhanden ist, die von der Sensoreinrichtung die durch den Reinigungsbetrieb der ersten Filtergruppen bewirkten Belastungen des Abgases mit Partikeln entgegennimmt und aufgrund der durch den Reinigungsbetrieb der ersten Filtergruppen bewirkten Belastungen des Abgases mit Partikeln die Zustände der ersten Filtergruppe ermittelt.

Für größere Filtereinrichtungen ist diese Vorgehensweise jedoch nicht anwendbar. Je nachdem, welche Filtergruppe mit dem Reinigungsgas beaufschlagt wird, ist der Ausschlag der Belastung höher oder niedriger, breiter oder schmäler. Die Ausschläge sind daher nicht mehr miteinander vergleichbar. Weiterhin können nur sehr hohe Ausschläge erkannt werden. Es kann also nur erkannt werden, wenn (mindestens) ein Filterschlauch nahezu keine Filterleistung mehr erbringt.
Aus der US 4 304 492 A ist eine Filtereinrichtung bekannt, bei der jedem einzelnen Filterschlauch jeweils eine eigene Sensoreinrichtung zum Erfassen der Belastung des den jeweiligen Filterschlauch durchströmenden Abgases mit Partikeln zugeordnet ist. Diese Vorgehensweise ist sehr aufwendig.

Die Aufgabe der vorliegenden Erfindung besteht darin, Möglichkeiten zu schaffen, mittels derer bereits im Vorfeld - d.h. lange vor einem Ausfall eines Filterschlauchs - erkannt werden kann, wenn sich die Filterleistung einer Filtergruppe verschlechtert.
Die Aufgabe wird durch ein Überwachungsverfahren mit den Merkmalen des Anspruchs 1 gelöst. Vorteilhafte Ausgestaltungen des Überwachungsverfahrens sind Gegenstand der abhängigen Ansprüche 2 bis 6. Erfindungsgemäß wird ein Überwachungsverfahren der eingangs genannten Art dadurch ausgestaltet,
- dass die Überwachungseinrichtung den Zustand einer jeweiligen ersten Filtergruppe aufgrund der durch den Reinigungsbetrieb dieser ersten Filtergruppe bewirkten Belastung des Abgases mit Partikeln in Verbindung mit der durch den Reinigungsbetrieb mindestens einer weiteren ersten Filtergruppe bewirkten Belastung des Abgases ermittelt.
Insbesondere wurde erkannt, dass die durch den Reinigungsbetrieb der jeweiligen ersten Filtergruppe bewirkte Belastung des Abgases zwar deutlich variiert, diese Variation jedoch innerhalb gewisser Grenzen einheitlich für alle ersten Filtergruppen ist. Es ist daher zwar nicht möglich, anhand der durch den Reinigungsbetrieb der jeweiligen ersten Filtergruppe bewirkten Belastung des Abgases als solcher direkt und unmittelbar den Zustand der jeweiligen ersten Filtergruppe zu ermitteln. Es ist jedoch möglich, den Zustand zu ermitteln, wenn die Belastung mit der Belastung mindestens einer weiteren ersten Filtergruppe in Relation gesetzt wird.
In der Regel ermittelt die Überwachungseinrichtung die durch den Reinigungsbetrieb der jeweiligen ersten Filtergruppe bewirkte Belastung des Abgases mit Partikeln zwischen einem für die jeweilige erste Filtergruppe spezifischen Startzeitpunkt und einem für die jeweilige erste Filtergruppe spezifischen Stoppzeitpunkt.
Es kann in Einzelfällen möglich sein, beispielsweise die beim Abreinigen der ersten Filtergruppen zwischen dem entsprechenden Startzeitpunkt und dem entsprechenden Stoppzeitpunkt auftretenden Belastungsspitzen miteinander zu vergleichen. In der Regel ermittelt die Überwachungseinrichtung jedoch die durch den Reinigungsbetrieb der jeweiligen ersten Filtergruppe bewirkte Belastung des Abgases mit Partikeln als Gesamtbelastung vom jeweiligen Startzeitpunkt bis zum jeweiligen Stoppzeitpunkt. Es wird also eine Integration der Belastung des Abgases mit Partikeln vom jeweiligen Startzeitpunkt bis zum jeweiligen Stoppzeitpunkt durchgeführt.

Die jeweilige erste Filtergruppe wird im Reinigungsbetrieb beginnend mit einem jeweiligen Anfangszeitpunkt bis zu einem jeweiligen Endzeitpunkt mit dem Reinigungsgas beaufschlagt. Der jeweilige Startzeitpunkt und der jeweilige Stoppzeitpunkt müssen selbstverständlich derart bestimmt sein, dass innerhalb des dadurch definierten Zeitintervalls die durch das Abreinigen der jeweiligen ersten Ventilgruppe hervorgerufene Belastung erfasst wird. Hierzu ist es möglich, dass die Überwachungseinrichtung den Startzeitpunkt und/oder den Stoppzeitpunkt anhand des Anfangszeitpunkts und/oder des Endzeitpunkts der jeweiligen ersten Filtergruppe ermittelt. Alternativ oder zusätzlich ist es möglich, dass die Überwachungseinrichtung den Startzeitpunkt anhand des Endzeitpunkts der zuvor abgereinigten ersten Filtergruppe und den Stoppzeitpunkt anhand des Anfangszeitpunkts der nachfolgend abgereinigten ersten Filtergruppe ermittelt.

In einer bevorzugten Ausgestaltung ist weiterhin vorgesehen, dass die Überwachungseinrichtung den Zustand der jeweiligen ersten Filtergruppe anhand eines Anteils der durch den Reinigungsbetrieb der jeweiligen ersten Filtergruppe bewirkten Belastung des Abgases mit Partikeln an der Summe der durch den Reinigungsbetrieb aller ersten Filtergruppen bewirkten Belastungen des Abgases mit Partikeln ermittelt. Diese Vorgehensweise hat sich in Versuchen als besonders robust und zuverlässig erwiesen.

Insbesondere im letztgenannten Fall ermittelt die Überwachungseinrichtung in der Regel den Zustand der jeweiligen ersten Filtergruppe anhand eines Vergleichs des ermittelten Anteils der durch den Reinigungsbetrieb der jeweiligen ersten Filtergruppe bewirkten Belastung des Abgases mit Partikeln an der Summe der durch den Reinigungsbetrieb aller ersten Filtergruppen bewirkten Belastungen des Abgases mit Partikeln mit einem Referenzanteil. Es ist möglich, das der Referenzanteil der Überwachungseinrichtung vorgegeben wird. Vorzugsweise jedoch ist vorgesehen, dass die Überwachungseinrichtung den Referenzanteil bei der erstmaligen Ermittlung der Anteile der durch den Reinigungsbetrieb der ersten Filtergruppen bewirkten Belastungen des Abgases mit Partikeln ermittelt. Unter dem Begriff der erstmaligen Ermittlung ist hierbei zu verstehen, dass der Überwachungseinrichtung ein Sonderbefehl vorgegeben wird, aufgrund dessen sie zwar beim Abreinigen der ersten Filtergruppen die Anteile ermittelt, in diesem Fall jedoch nicht den Vergleich mit dem Referenzanteil vornimmt, sondern anhand der sich ergebenden Anteile die Referenzanteile bestimmt. Der Sonderbefehl kann der Überwachungseinrichtung beispielsweise vorgegeben werden, wenn Filterschläuche gewechselt wurden.

Wie bereits erwähnt, sind oftmals mehrere Drucklufttanks vorhanden, die jeweils mehrere Ventile mit Druckluft oder dergleichen beaufschlagen. In diesem Fall bilden die aus einem bestimmten Tank beaufschlagen Ventile bzw. die zugehörigen Filtergruppen die ersten Ventile bzw. die ersten Filtergruppen, die zweiten Ventile bzw. die zweiten Filtergruppen usw. Dies entspricht dem Sachverhalt,
- dass die ersten Filtergruppen im Reinigungsbetrieb über das der jeweiligen ersten Filtergruppe zugeordnete erste Ventil aus einem den ersten Filtergruppen gemeinsamen ersten Tank mit dem Reinigungsgas beaufschlagt werden,
- dass das Befreien eines zweiten Teils des Abgases von den Partikeln in einer Mehrzahl von zweiten Filtergruppen erfolgt, die jeweils eine Anzahl an Filterschläuchen aufweisen,
- dass in einem Reinigungsbetrieb der jeweiligen zweiten Filtergruppe die Filterschläuche der jeweiligen zweiten Filtergruppe an der Abluftseite über ein der jeweiligen zweiten Filtergruppe zugeordnetes zweites Ventil mit einem Reinigungsgas beaufschlagt werden, so dass ein an der Zuluftseite der Filterschläuche der jeweiligen zweiten Filtergruppe angelagerter Filterkuchen sich von der Zuluftseite der Filterschläuche der jeweiligen zweiten Filtergruppe löst,
- dass die zweiten Filtergruppen im Reinigungsbetrieb über das der jeweiligen zweiten Filtergruppe zugeordnete jeweilige zweite Ventil aus einem den zweiten Filtergruppen gemeinsamen zweiten Tank mit dem Reinigungsgas beaufschlagt werden und
- dass der zweite Tank ein von dem ersten Tank verschiedener Tank ist.
Im Stand der Technik erfolgt das Abreinigen der Filterschläuche alternativ online oder offline. Ein Abreinigen offline bedeutet, dass während des Abreinigens der betreffenden Filterschläuche das Abgas umgeleitet wird, so dass die betreffenden Filterschläuche während des Abreinigens sowie unmittelbar vor und nach dem Abreinigen nicht von mit Partikeln belastetem Abgas umströmt sind. Zum Umleiten kann beispielsweise temporär eine Klappe geschlossen werden, die im Strömungsweg des Abgases vor den betreffenden Filterschläuchen angeordnet ist. Alternativ oder zusätzlich kann temporär eine Klappe geschlossen werden, die im Strömungsweg des Abgases hinter den betreffenden Filterschläuchen angeordnet ist. Ein Abreinigen online bedeutet im Gegensatz hierzu, dass während des Abreinigens der betreffenden Filterschläuche das Abgas nicht umgeleitet wird, so dass die betreffenden Filterschläuche auch während des Abreinigens von mit Partikeln belastetem Abgas umströmt sind. Es ist prinzipiell möglich, das erfindungsgemäße Überwachungsverfahren in Verbindung mit einer offline-Abreinigung der Filterschläuche durchzuführen. Die vorliegende Erfindung zeigt jedoch bessere Ergebnisse bei einer online-Abreinigung der Filterschläuche.

Die Aufgabe wird weiterhin durch ein Computerprogramm mit den Merkmalen des Anspruchs 7 gelöst. Vorteilhafte Ausgestaltungen des Computerprogramms sind Gegenstand der abhängigen Ansprüche 8 bis 11.

Erfindungsgemäß wird ein Computerprogramm der eingangs genannten Art dadurch ausgestaltet, dass die Abarbeitung des Maschinencodes durch die Überwachungseinrichtung bewirkt, dass die Überwachungseinrichtung von der Sensoreinrichtung die durch den Reinigungsbetrieb der ersten Filtergruppen bewirkten Belastungen des Abgases mit Partikeln entgegennimmt und aufgrund der durch den Reinigungsbetrieb der jeweiligen ersten Filtergruppe bewirkten Belastung des Abgases mit Partikeln in Verbindung mit der durch den Reinigungsbetrieb mindestens einer weiteren ersten Filtergruppe bewirkten Belastung des Abgases einen Zustand der jeweiligen ersten Filtergruppe ermittelt.

Die vorteilhaften Ausgestaltung des Computerprogramms korrespondieren mit denen des Überwachungsverfahrens.

Die Aufgabe wird weiterhin durch eine Überwachungseinrichtung mit den Merkmalen des Anspruchs 12 gelöst. Erfindungsgemäß ist das Computerprogramm, mit dem die Überwachungseinrichtung programmiert ist, als erfindungsgemäßes Computerprogramm ausgebildet.

Die Aufgabe wird weiterhin durch eine Filtereinrichtung mit den Merkmalen des Anspruchs 13 gelöst. Erfindungsgemäß ist vorgesehen,
- dass die Überwachungseinrichtung erfindungsgemäß ausgebildet ist.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Primärprozess und eine Filtereinrichtung,
- FIG 2: die Filtereinrichtung von FIG 1 von oben,
- FIG 3: einen einzelnen Filterschlauch im Normalbetrieb,
- FIG 4: einen einzelnen Filterschlauch im Reinigungsbetrieb,
- FIG 5: ein Zeitdiagramm,
- FIG 6: einen Ausschnitt von FIG 6,
- FIG 7: ein Ablaufdiagramm,
- FIG 8: einen Verlauf eines Belastungsanteils und
- FIG 9: ein weiteres Ablaufdiagramm.

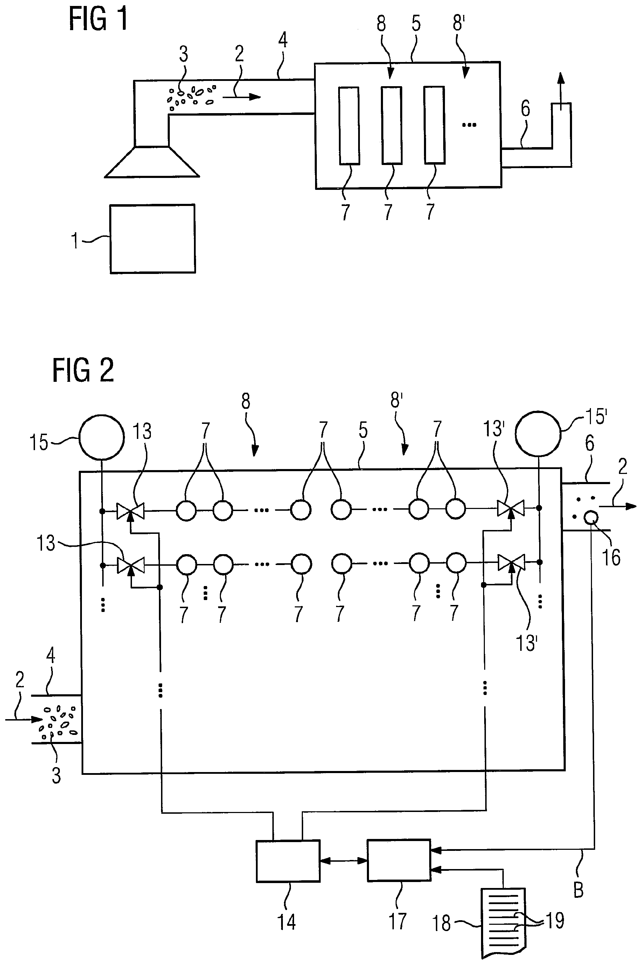

Gemäß den FIG 1 und 2 entsteht in einem Primärprozess 1 ein Abgas 2, das - oftmals in erheblichem Umfang - mit Partikeln 3 belastet ist. Bei dem Primärprozess 1 kann es sich beispielsweise um einen Lichtbogenofen-Prozess, einen Hochofenprozess, einen Prozess zur Zementherstellung und andere mehr handeln. In der weit überwiegenden Mehrheit der Fälle liegen die Partikel 3 als Staub vor. Nachfolgend wird daher anstelle der Formulierung "Partikel 3" die Formulierung "Staub 3" verwendet, auch wenn damit stets die Partikel 3 gemeint sind.

Zur Reinigung des staubbelasteten Abgases 2 (= Rohgas 2) wird das staubbelastete Abgas 2 über einen Zuluftkanal 4 einer Filtereinrichtung 5 zugeführt. In der Filtereinrichtung 5 wird das Rohgas 2 von dem Staub 3 vollständig oder zumindest zum Großteil befreit (= gereinigt). Sodann wird das staubbefreite Abgas 2 (= Reingas 2) von der Filtereinrichtung 5 über einen Abluftkanal 6 an die Umgebung abgegeben.

Die Reinigung des Abgases 2 erfolgt in der Filtereinrichtung 5 in einer Vielzahl von Filterschläuchen 7. Insbesondere wird ein erster Teil des Abgases 2 in einer Mehrzahl von ersten Filtergruppen 8 gereinigt, ein zweiter Teil des Abgases 2 in einer Mehrzahl von zweiten Filtergruppen 8'. Die Filtergruppen 8, 8' weisen jeweils eine Anzahl an Filterschläuchen 7 auf. In der Regel weisen die Filtergruppen 8, 8' jeweils mehrere Filterschläuche 7 auf, insbesondere bis zu zehn Filterschläuchen 7 pro Filtergruppe 8, 8'. Minimal weisen die Filtergruppen 8, 8' jeweils einen einzigen Filterschlauch 7 auf.

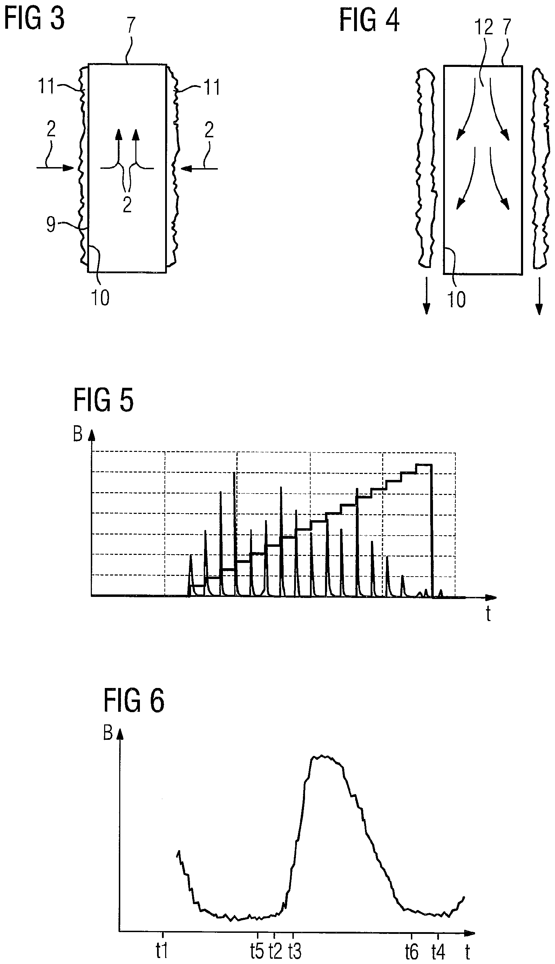

In einem Normalbetrieb der jeweiligen ersten bzw. zweiten Filtergruppe 8, 8' tritt das Rohgas 2 entsprechend der Darstellung in FIG 3 an einer Zuluftseite 9 in die Filterschläuche 7 der jeweiligen ersten bzw. zweiten Filtergruppe 8, 8' ein und tritt das Reingas 2 an einer Abluftseite 10 aus den Filterschläuchen 7 der jeweiligen ersten bzw. zweiten Filtergruppe 8, 8' aus. Mit den Begriffen "Zuluftseite 9" und "Abluftseite 10" sind die entsprechenden Flächen des jeweiligen Filterschlauchs 7 als solche gemeint.

Die Porengröße der Filterschläuche 7 ist derart gewählt, dass der Staub 3 die Filterschläuche 7 nicht passieren kann. Der Staub 3 lagert sich daher an der Zuluftseite 9 der Filterschläuche 7 der jeweiligen ersten bzw. zweiten Filtergruppe 8, 8' an. Die Gesamtheit des angelagerten Staubes 3 wird in Fachkreisen als Filterkuchen 11 bezeichnet.

Von Zeit zu Zeit müssen die Filterschläuche 7 abgereinigt werden, d.h. vom Filterkuchen 11 befreit werden. Dies erfolgt in einem Reinigungsbetrieb der jeweiligen ersten bzw. zweiten Filtergruppe 8, 8'. Im Reinigungsbetrieb der jeweiligen ersten bzw. zweiten Filtergruppe 8, 8' werden entsprechend der Darstellung in FIG 4 die Filterschläuche 7 der jeweiligen ersten bzw. zweiten Filtergruppe 8, 8' an der Abluftseite 10 mit einem Reinigungsgas 12 beaufschlagt. Die Beaufschlagung der jeweiligen ersten bzw. zweiten Filtergruppe 8, 8' mit dem Reinigungsgas 12 erfolgt über ein der jeweiligen Filtergruppe 8, 8' zugeordnetes erstes bzw. zweites Ventil 13, 13'. Die Ventile 13, 13' werden von einer Steuereinrichtung 14 entsprechend angesteuert.

Die ersten und zweiten Ventile 13, 13' sind mit einem ersten bzw. zweiten Tank 15, 15' verbunden. Aus dem jeweiligen Tank 15, 15' heraus werden die jeweiligen Filtergruppen 8, 8' mit dem Reinigungsgas 12 beaufschlagt. Der erste Tank 15 ist für die Ventile 13 der ersten Filtergruppen 8 gemeinsam vorhanden. Ebenso ist der zweite Tank 15' ist für die Ventile 13' der zweiten Filtergruppen 8' gemeinsam vorhanden. Der erste Tank 15 und der zweite Tank 15' sind jedoch voneinander verschiedene Tanks 15, 15'. Pro Tank 15, 15' sind in der Regel mehrere Ventile 13, 13' vorhanden, beispielsweise bis zu zehn Ventile 13, 13'.

Aufgrund der Beaufschlagung der Filterschläuche 7 der jeweiligen Filtergruppe 8, 8' mit dem Reinigungsgas 12 - im Ergebnis mit einem kurzen, intensiven Druckluftstoß - kehrt sich bei den betreffenden Filterschläuchen 7 die Strömungsrichtung um. Dadurch blähen sich die betroffenen Filterschläuche 7 auf und löst sich entsprechend der Darstellung in FIG 4 der an der Zuluftseite 9 der Filterschläuche 7 der jeweiligen ersten bzw. zweiten Filtergruppe 8, 8' angelagerte Filterkuchen 11 von der Zuluftseite 9 der Filterschläuche 7 der jeweiligen ersten bzw. zweiten Filtergruppe 8, 8'. Nach der Beendigung des jeweiligen Druckluftstoßes geben Stützkörbe (nicht dargestellt) den Filterschläuchen 7 die nötige mechanische Stabilität. Der Filterkuchen 11 sammelt sich in einem Sammelraum und wird von dort abtransportiert. Der Abtransport erfolgt auf konventionelle Weise. Er ist nicht Gegenstand der vorliegenden Erfindung.

Im Abluftkanal 6 ist eine Sensoreinrichtung 16 angeordnet. Mittels der Sensoreinrichtung 16 wird - vorzugsweise kontinuierlich, zumindest aber im Reinigungsbetrieb der Filtergruppen 8, 8' - die verbleibende Staubbelastung B des Reingases 2 als Funktion der Zeit t erfasst. Die erfasste Staubbelastung B wird einer Überwachungseinrichtung 17 zugeführt, die mit der Sensoreinrichtung 16 verbunden ist. Die Überwachungseinrichtung 17 kann mit der Steuereinrichtung 14 identisch sein. Alternativ kann es sich um eine andere Einrichtung handeln. Unabhängig davon, ob die Überwachungseinrichtung 17 mit der Steuereinrichtung 14 identisch ist oder nicht, ist die Überwachungseinrichtung 17 jedoch mit einem Computerprogramm 18 programmiert. Das Computerprogramm 18 umfasst Maschinencode 19, der von der Überwachungseinrichtung 17 abarbeitbar ist. Die Abarbeitung des Maschinencodes 19 durch die Überwachungseinrichtung 17 bewirkt, dass die Überwachungseinrichtung 17 ein Überwachungsverfahren ausführt, dass nachstehend in Verbindung mit den weiteren FIG näher erläutert wird.

Gemäß FIG 5 werden die den einzelnen Filtergruppen 8, 8' zugeordneten Ventile 13, 13' von der Steuereinrichtung 14 sequenziell nacheinander angesteuert. Die Steuereinrichtung 14 beendet somit - siehe FIG 6 - zu einem Zeitpunkt t1 die Ansteuerung eines bestimmten Ventils 13, 13'. Das entsprechende Ventil 13, 13' wird also geschlossen. Zu einem späteren Zeitpunkt t2 beginnt die Steuereinrichtung 14 die Ansteuerung eines weiteren Ventils 13, 13'. Das entsprechende Ventil 13, 13' wird also geöffnet. Zu einem wiederum späteren Zeitpunkt t3 beendet die Steuereinrichtung 14 die Ansteuerung des nunmehr angesteuerten Ventils 13, 13'. Das entsprechende Ventil 13, 13' wird also geschlossen. Zu einem wiederum späteren Zeitpunkt t4 beginnt die Steuereinrichtung 14 die Ansteuerung eines weiteren Ventils 13, 13'. Das entsprechende Ventil 13, 13' wird also geöffnet.

Zu jedem Zeitpunkt ist daher maximal ein einziges Ventil 13, 13' geöffnet, so dass die Filterschläuche 7 der zugehörigen Filtergruppe 8, 8' mit dem Reinigungsgas 12 beaufschlagt werden. Alle anderen Filtergruppen 8, 8' befinden sich hingegen im Normalbetrieb. Die Zeitpunkte t2, t4, zu denen ein Ventil 13, 13' geöffnet wird, werden nachfolgend als Anfangszeitpunkte t2, t4 bezeichnet. Die Zeitpunkte t1, t3, zu denen ein Ventil 13, 13' geschlossen wird, werden nachfolgend als Endzeitpunkte t1, t3 bezeichnet. Jede Filtergruppe 8, 8' wird somit im Reinigungsbetrieb beginnend mit einem jeweiligen Anfangszeitpunkt t2, t4 bis zu einem jeweiligen Endzeitpunkt t1, t3 mit dem Reinigungsgas 12 beaufschlagt.

Der Reinigungsbetrieb einer bestimmten Filtergruppe 8, 8' bewirkt entsprechend der Darstellung in den FIG 5 und 6 eine Belastungsspitze im Reingas 2. Die Anfangszeitpunkte t2, t4 für den Beginn der Ansteuerung eines nachfolgenden Ventils 13, 13' und die Endzeitpunkt t1, t3 für das Beenden der Ansteuerung des vorhergehenden Ventils 13, 13' sind weiterhin derart aufeinander abgestimmt (insbesondere hinreichend gegeneinander verzögert), dass die Belastungsspitze im Reingas 2 ausschließlich von dem momentan jeweils angesteuerten Ventil 13, 13' bzw. der korrespondierenden Filtergruppe 8, 8' bewirkt wird.

Der zeitliche Verlauf der Belastung B - aufgrund der entsprechenden Ansteuerung der Ventile 13, 13' also die durch den Reinigungsbetrieb der jeweiligen ersten bzw. zweiten Filtergruppe 8, 8' bewirkte Staubbelastung des Abgases 2 - wird mittels der Sensoreinrichtung 16 erfasst und an die Überwachungseinrichtung 17 übermittelt. Wie sich hierbei aus FIG 5 ergibt, weist der zeitliche Verlauf der Belastung B für die Abreinigung der einzelnen Filtergruppen 8, 8' deutlich unterschiedliche Spitzenwerte und auch deutlich unterschiedliche Zeitdauern auf.

Im Rahmen der nachfolgend erläuterten Implementierung des Überwachungsverfahrens wird zunächst angenommen, dass ausschließlich die ersten Filtergruppen 8 vorhanden sind. Die zweiten Filtergruppen 8' werden also völlig vernachlässigt.

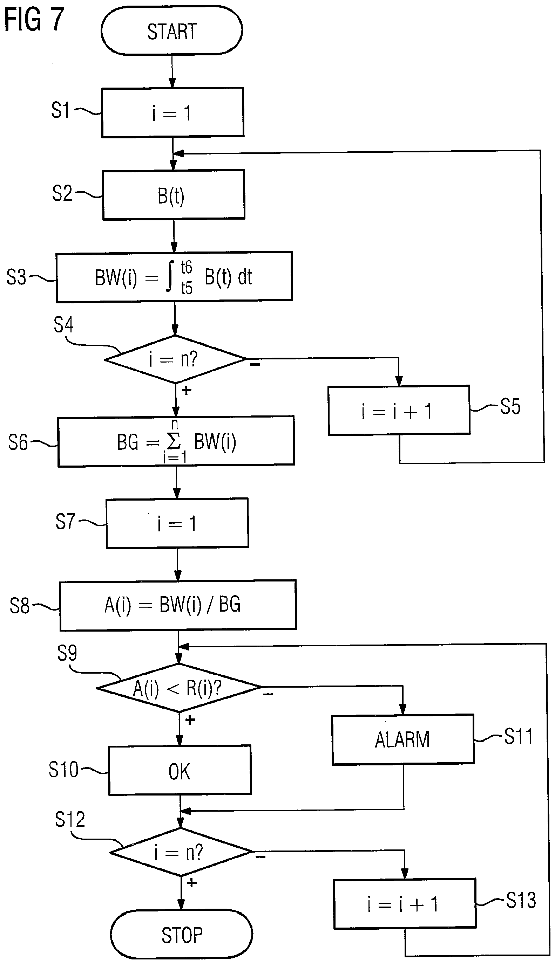

Gemäß FIG 7 setzt die Überwachungseinrichtung 17 zunächst in einem Schritt S1 einen Index i (= Nummer der jeweiligen ersten Filtergruppe 8) auf den Wert 1. In einem Schritt S2 nimmt die Überwachungseinrichtung 17 von der Sensoreinrichtung 16 die von der Sensoreinrichtung 16 erfasste Belastung B als Funktion der Zeit t entgegen. In einem Schritt S3 ermittelt die Überwachungseinrichtung 16 anhand der im Schritt S2 entgegengenommenen Belastung B einen Belastungswert BW(i). In einem Schritt S4 prüft die Überwachungseinrichtung 17, ob sie die Schritte S2 und S3 bereits für alle erste Filtergruppen 8 vorgenommen hat, d.h. ob der Index i einen Endwert n erreicht hat. Wenn dies nicht der Fall ist, inkrementiert die Überwachungseinrichtung 17 in einem Schritt S5 den Index i und geht sodann zum Schritt S2 zurück. Anderenfalls geht die Überwachungseinrichtung 17 zu einem Schritt S6 über.

Die Überwachungseinrichtung 17 ermittelt den Belastungswert BW(i) im Schritt S3 anhand des zeitlichen Verlaufs der Belastung B zwischen einem für die jeweilige erste Filtergruppe 8 spezifischen Startzeitpunkt t5 und einem für die jeweilige erste Filtergruppe 8 spezifischen Stoppzeitpunkt t6. Insbesondere kann die Überwachungseinrichtung 17 entsprechend der Darstellung in FIG 7 den Belastungswert BW(i) der jeweiligen ersten Filtergruppe 8 als Gesamtbelastung (= Integral) vom jeweiligen Startzeitpunkt t5 bis zum jeweiligen Stoppzeitpunkt t6 ermitteln.

Damit die Überwachungseinrichtung 17 die Abfolge der Schritte S1 bis S5 mit der Ansteuerung der Ventile 13, 13' koordinieren und demzufolge den Belastungswert BW(i) korrekt ermitteln kann, müssen der Überwachungseinrichtung 17 entsprechende Informationen zur korrekten Ermittlung der Startzeitpunkte t5 und der Stoppzeitpunkte t6 zur Verfügung stehen. Beispielsweise ist es möglich, dass die Ansteuerung der Ventile 13, 13' zu vorab festgelegten Zeitpunkten t1 bis t4 erfolgt und diese Zeitpunkte t1 bis t4 der Überwachungseinrichtung 17 bekannt sind. Alternativ können die Zeitpunkte t1 bis t4 von der Steuereinrichtung 14 an die Überwachungseinrichtung 17 übermittelt werden oder kann die Steuereinrichtung 17 mit der Überwachungseinrichtung 17 identisch sein.

In diesen Fällen kann die Überwachungseinrichtung 17 beispielsweise den Startzeitpunkt t5 für die jeweilige erste Filtergruppe 8 anhand des Anfangszeitpunkts t2 für die Ansteuerung des korrespondierenden ersten Ventils 13 ermitteln. Bei bekannter Ansteuerungsdauer kann auch der Stoppzeitpunkt t6 anhand des Anfangszeitpunkts t2 für die Ansteuerung des korrespondierenden ersten Ventils 13 ermittelt werden. Alternativ kann die Überwachungseinrichtung 17 den Startzeitpunkt t5 für die jeweilige erste Filtergruppe 8 und/oder den Stoppzeitpunkt t6 für die jeweilige erste Filtergruppe 8 ausgehend von dem Endzeitpunkt t3 für die Ansteuerung des korrespondierenden ersten Ventils 13 ermitteln. Ebenso ist es möglich, dass die Überwachungseinrichtung 17 den Startzeitpunkt t5 für die jeweilige erste Filtergruppe 8 anhand des Endzeitpunkts t1 der zuvor abgereinigten ersten Filtergruppe 8 ermittelt und/oder den Stoppzeitpunkt t6 für die jeweilige erste Filtergruppe 8 anhand des Anfangszeitpunkts t4 der nachfolgend abgereinigten ersten Filtergruppe 8 ermittelt.

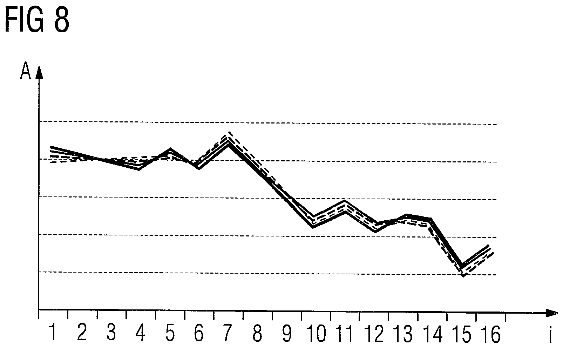

Die vorliegende Erfindung beruht auf der Erkenntnis, dass die Belastungen B, die Belastungswerte BW(i) und auch die Belastungsspitzen zwar erheblichen Schwankungen unterliegen können, die Verhältnisse der Belastungswerte BW(i) bzw. entsprechend der Darstellung in FIG 8 Anteile A(i) der Belastungswerte BW(i) an der Summe der Belastungswerte BW(i) jedoch auch über lange Zeit nahezu konstant bleiben bzw. sich nur im Fehlerfall ändern. Schwankungen der Anteile A(i) liegen, bezogen auf die Summe der Belastungswerte BW(i), im Bereich von nur ca. 1 %.

Im Schritt S6 ermittelt die Überwachungseinrichtung 17 daher eine Gesamtbelastung BG. Die Gesamtbelastung BG ergibt sich als Summe der von den ersten Filtergruppen 8 insgesamt bewirkten Belastungen B, also als Summe der zugehörigen Belastungswerte BW(i) (mit i = 1,..., n und n = Anzahl an ersten Filtergruppen 8).

In einem Schritt S7 setzt die Überwachungseinrichtung 17 den Index i erneut auf den Wert 1. In einem Schritt S8 ermittelt die Überwachungseinrichtung 17 den Anteil A(i) der durch den Reinigungsbetrieb der jeweiligen ersten Filtergruppe 8 bewirkten Staubbelastung B des Reingases 2 an der Summe BG. In einem Schritt S9 vergleicht die Überwachungseinrichtung 17 den ermittelten Anteil A(i) mit einem individuell für die jeweilige erste Filtergruppe 8 definierten Referenzanteil R(i). Je nach Ergebnis des Vergleichs geht die Überwachungseinrichtung 17 entweder zu einem Schritt S10 oder zu einem Schritt S11 über. Es ist möglich, dass der Schritt S10 entfällt oder dass die Überwachungseinrichtung 17 im Schritt S10 keine Maßnahmen ergreift. Alternativ kann die Überwachungseinrichtung 17 im Schritt S10 eine OK-Meldung an einen Menschen 20, eine übergeordnete Einrichtung 21 und/oder die Steuereinrichtung 14 ausgeben. Im Schritt S11 gibt die Überwachungseinrichtung 17 eine Alarm-Meldung an den Menschen 20, die übergeordnete Einrichtung 21 und/oder die Steuereinrichtung 14 aus.

Es ist theoretisch denkbar, im Rahmen des Schrittes S9 auch zu überprüfen, ob der jeweilige Anteil A(i) einen Mindestwert aufweist. Dies ist jedoch nicht erforderlich, da dies lediglich auf eine verbesserte Filterleistung hindeutet. Es ist weiterhin denkbar, anstelle einer Alarmmeldung und einer OK-Meldung auch Zwischenzustände zu ermitteln oder direkt den ermittelten Anteil A(i) auszugeben, beispielsweise als auf die Gesamtbelastung BG bezogenen absoluten Anteil A(i) oder als auf den jeweiligen Referenzanteil R(i) bezogenen relativen Wert oder als absolute oder relative Abweichung vom Referenzanteil R(i). Es ist weiterhin möglich, die ermittelten Anteile A(i) im Sinne einer Historie abzuspeichern, beispielsweise zu Dokumentationszwecken oder zum frühzeitigen Erkennen bevorstehender Fehler anhand einer Analyse des zeitlichen Verlaufs des Anteils A(i).

Nach der Ausführung eines der Schritte S10 und S11 geht die Überwachungseinrichtung 17 zu einem Schritt S12 über. Im Schritt S12 prüft die Überwachungseinrichtung 17, ob sie die Schritte S8 bis S11 bereits für alle erste Filtergruppen 8 vorgenommen hat. Wenn dies nicht der Fall ist, inkrementiert die Überwachungseinrichtung 17 in einem Schritt S13 den Index i und geht sodann zum Schritt S8 zurück. Anderenfalls ist die Vorgehensweise von FIG 7 beendet.

Im Ergebnis ermittelt die Überwachungseinrichtung 17 somit den Zustand der jeweiligen ersten Filtergruppe 8 anhand des entsprechenden Anteils A(i) an der Gesamtbelastung BG.

Der Anteil A(i) an der Gesamtbelastung BG bzw. hiermit korrespondierend der Vergleich des entsprechenden Belastungswerts BW(i) mit den anderen Belastungswerten BW(i) (bzw. der Summe der Belastungswerte BW(i)) stellt eine besonders vorteilhafte Ausgestaltung dar. Entscheidend ist, dass die Überwachungseinrichtung 17 zur Ermittlung des Zustands der jeweiligen ersten Filtergruppe 8 nicht nur die durch den Reinigungsbetrieb der jeweiligen ersten Filtergruppe 8 bewirkte Belastung B des Abgases 2 bzw. den zugehörigen Belastungswert BW(i) heranzieht, sondern zusätzlich auch die durch den Reinigungsbetrieb mindestens einer weiteren ersten Filtergruppe 8 bewirkte Belastung des Abgases 2 bzw. den zugehörigen Belastungswert BW(i) für mindestens eine weitere erste Filtergruppe 8.

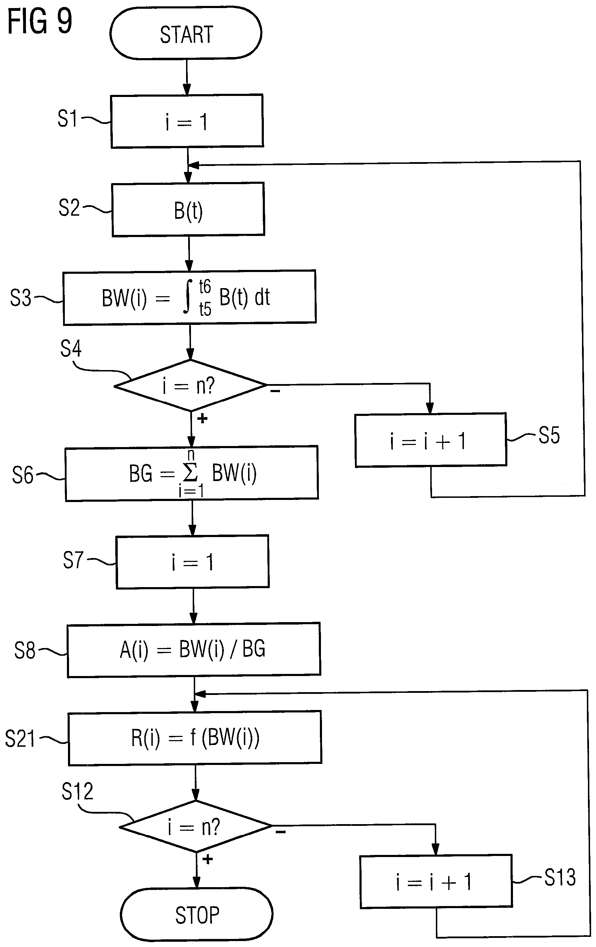

Die Referenzanteile R(i) können der Überwachungseinrichtung 17 auf prinzipiell beliebige Weise vorgegeben werden. Sie müssen jedoch selbstverständlich sinnvoll bestimmt sein. Insbesondere ist es möglich, die Überwachungseinrichtung 17 - beispielsweise durch Vorgabe eines Sonderbefehls S - in einen in FIG 9 dargestellten Kalibrierbetrieb zu versetzen. Im Kalibrierbetrieb führt die Überwachungseinrichtung 17 ebenso wie in FIG 7 die Schritte S1 bis S8 sowie S12 und S13 aus. Die Schritte S1 bis S8, S12 und S13 wurden bereits in Verbindung mit FIG 7 erläutert. Die Schritte S9 bis S11 von FIG 7 sind jedoch durch einen Schritt S21 ersetzt. Im Schritt S21 ermittelt die Überwachungseinrichtung 17 den jeweiligen Referenzanteil R(i) anhand des jeweiligen Anteils A(i). Beispielsweise kann die Überwachungseinrichtung 17 den jeweiligen Referenzanteil R(i) dadurch ermitteln, dass sie auf den jeweiligen Anteil A(i) einen Offset addiert, der einen geeigneten Wert aufweist. Der Wert des Offsets ist in der Regel für alle Referenzanteile R(i) einheitlich. Er kann beispielsweise bei 0,01 bis 0,03 liegen, insbesondere bei etwa 0,02.

Wenn entsprechend der Darstellung in FIG 2 zusätzlich den ersten Filtergruppen 8 auch die zweiten Filtergruppen 8' vorhanden sind, ist es möglich, die zweiten Filtergruppen 8' in die Vorgehensweise von FIG 7 mit einzubeziehen. In diesem Fall besteht bezüglich der Überwachung durch die Überwachungseinrichtung 17 kein Unterschied zwischen den ersten und den zweiten Filtergruppen 8, 8'. Vorzugsweise aber wird auch im Rahmen der Überwachung zwischen den ersten Filtergruppen 8 und den zweiten Filtergruppen 8' unterschieden. Insbesondere wird die jeweilige Gesamtbelastung BG individuell für die jeweiligen Filtergruppen 8, 8' ermittelt, also je eine eigene Gesamtbelastung BG für die ersten Filtergruppen 8 und die zweiten Filtergruppen 8'. Bezüglich der Ansteuerung der zweiten Filtergruppen 8' kann unterschieden werden. Wenn die durch die Ansteuerung der zweiten Filtergruppen 8' bewirkten Belastungen B mittels derselben Sensoreinrichtung 16 erfasst werden, also nicht auseinandergehalten werden kann, ob eine bestimmte Belastung B durch die Ansteuerung einer ersten oder einer zweiten Filtergruppe 8, 8' bewirkt wurde, muss die Ansteuerung der Filtergruppen 8, 8' koordiniert erfolgen. Anderenfalls kann die Ansteuerung der Filtergruppen 8, 8' unabhängig voneinander erfolgen.

Zusammengefasst betrifft die vorliegende Erfindung somit folgenden Sachverhalt:
Eine Filtereinrichtung 5 filtert in einem Normalbetrieb belastetes Abgas 2 in Filtergruppen 8 mit Filterschläuchen 7. In einem Reinigungsbetrieb wird jeweils eine Filtergruppe 8 an der Abluftseite 10 über ein zugeordnetes Ventil 13 mit einem Reinigungsgas 12 beaufschlagt, so dass sich der Filterkuchen 11 von der Zuluftseite 9 der Filterschläuche 7 löst. Eine im Abluftkanal 6 angeordnete Sensoreinrichtung 16 erfasst eine durch den Reinigungsbetrieb der jeweiligen Filtergruppe 8 bewirkte Belastung B des Abgases 2. Eine Überwachungseinrichtung 17 nimmt die bewirkten Belastungen B des Abgases 2 entgegen. Sie ermittelt jeweils einen Zustand der jeweiligen Filtergruppe 8, und zwar aufgrund der durch den Reinigungsbetrieb der jeweiligen Filtergruppe 8 bewirkten Belastung B in Verbindung mit der durch den Reinigungsbetrieb mindestens einer weiteren Filtergruppe 8 bewirkten Belastung B.

Die vorliegende Erfindung weist viele Vorteile auf. So kann ein etwaiger Fehler bzw. das Bevorstehen eines Fehlers individuell für jede einzelne Filtergruppe 8, 8' ermittelt werden. Eine anschließende Fehlersuche kann daher auf die (ergänze: wenigen) Filterschläuche 7 der betroffenen Filtergruppe 8, 8' beschränkt werden. Auch ist ein vorsorglicher Austausch der Filterschläuche 7 nicht erforderlich. Es müssen vielmehr lediglich diejenigen Filterschläuche 7 ausgetauscht werden, deren Versagen unmittelbar bevorsteht oder bereits eingetreten ist. Zusätzliche Einrichtungen sind - mit Ausnahme der Überwachungseinrichtung 17 - nicht erforderlich. Insbesondere ist die Sensoreinrichtung 16 in der Regel bereits vorhanden.

### Bezugszeichenliste

- 1: Primärprozess
- 2: Abgas
- 3: Partikel
- 4: Zuluftkanal
- 5: Filtereinrichtung
- 6: Abluftkanal
- 7: Filterschläuche
- 8, 8': Filtergruppen
- 9: Zuluftseite
- 10: Abluftseite
- 11: Filterkuchen
- 12: Reinigungsgas
- 13, 13': Ventile
- 14: Steuereinrichtung
- 15, 15': Tanks
- 16: Sensoreinrichtung
- 17: Überwachungseinrichtung
- 18: Computerprogramm
- 19: Maschinencode
- 20: Mensch
- 21: übergeordnete Einrichtung

- A: Anteile
- B: Belastung
- BG: Gesamtbelastung
- BW: Belastungswerte
- i: Index
- n: Endwert
- R: Referenzanteile
- S: Sonderbefehl
- S1 bis S21: Schritte
- t: Zeit
- t1 bis t6: Zeitpunkte

## Patentansprüche

1. Überwachungsverfahren für eine Filtereinrichtung (5),
- wobei der Filtereinrichtung (5) über einen Zuluftkanal (4) ein mit Partikeln (3) belastetes Abgas (2) zugeführt wird, das Abgas (2) in der Filtereinrichtung (5) von den Partikeln (3) befreit wird und das von den Partikeln (3) befreite Abgas (2) von der Filtereinrichtung (5) über einen Abluftkanal (6) abgegeben wird,
- wobei das Befreien eines ersten Teils des Abgases (2) von den Partikeln (3) in einer Mehrzahl von ersten Filtergruppen (8) der Filtereinrichtung (5) erfolgt, die jeweils eine Anzahl an Filterschläuchen (7) aufweisen,
- wobei in einem Normalbetrieb der jeweiligen ersten Filtergruppe (8) das Abgas (2) an einer Zuluftseite (9) in die Filterschläuche (7) der jeweiligen ersten Filtergruppe (8) eintritt und an einer Abluftseite (10) aus den Filterschläuchen (7) der jeweiligen ersten Filtergruppe (8) austritt, so dass die Partikel (3) sich als Filterkuchen (11) an der Zuluftseite (9) der Filterschläuche (7) der jeweiligen ersten Filtergruppe (8) anlagern,
- wobei in einem Reinigungsbetrieb der jeweiligen ersten Filtergruppe (8) die Filterschläuche (7) der jeweiligen ersten Filtergruppe (8) an der Abluftseite (10) über ein der jeweiligen ersten Filtergruppe (8) zugeordnetes erstes Ventil (13) mit einem Reinigungsgas (12) beaufschlagt werden, so dass der an der Zuluftseite (9) der Filterschläuche (7) der jeweiligen ersten Filtergruppe (8) angelagerte Filterkuchen (11) sich von der Zuluftseite (9) der Filterschläuche (7) der jeweiligen ersten Filtergruppe (8) löst,
- wobei mittels einer im Abluftkanal (6) angeordneten Sensoreinrichtung (16) eine durch den Reinigungsbetrieb der jeweiligen ersten Filtergruppe (8) bewirkte Belastung (B) des Abgases (2) mit Partikeln (3) erfasst wird,
- wobei eine Überwachungseinrichtung (17) von der Sensoreinrichtung (16) die durch den Reinigungsbetrieb der ersten Filtergruppen (8) bewirkten Belastungen (B) des Abgases (2) mit Partikeln (3) entgegennimmt und aufgrund der durch den Reinigungsbetrieb der jeweiligen ersten Filtergruppe (8) bewirkten Belastung (B) des Abgases (2) mit Partikeln (3) in Verbindung mit der durch den Reinigungsbetrieb mindestens einer weiteren ersten Filtergruppe (8) bewirkten Belastung (B) des Abgases (2) einen Zustand der jeweiligen ersten Filtergruppe (8) ermittelt und
- wobei die Überwachungseinrichtung (17) den Zustand der jeweiligen ersten Filtergruppe (8) anhand eines Anteils (A) der durch den Reinigungsbetrieb der jeweiligen ersten Filtergruppe (8) bewirkten Belastung (B) des Abgases (2) mit Partikeln (3) an der Summe (BG) der durch den Reinigungsbetrieb aller ersten Filtergruppen (8) bewirkten Belastungen (B) des Abgases (2) mit Partikeln (3) ermittelt.

2. Überwachungsverfahren nach Anspruch 1,
**dadurch gekennzeichnet,**
**dass** die Überwachungseinrichtung (17) die durch den Reinigungsbetrieb der jeweiligen ersten Filtergruppe (8) bewirkte Belastung (B) des Abgases (2) mit Partikeln (3) zwischen einem für die jeweilige erste Filtergruppe (8) spezifischen Startzeitpunkt (t5) und einem für die jeweilige erste Filtergruppe (8) spezifischen Stoppzeitpunkt (t6) ermittelt.

3. Überwachungsverfahren nach Anspruch 2,
**dadurch gekennzeichnet,**
**dass** die Überwachungseinrichtung (17) die durch den Reinigungsbetrieb der jeweiligen ersten Filtergruppe (8) bewirkte Belastung (B) des Abgases (2) mit Partikeln (3) als Gesamtbelastung (BW) vom jeweiligen Startzeitpunkt (t5) bis zum jeweiligen Stoppzeitpunkt (t6) ermittelt.

4. Überwachungsverfahren nach Anspruch 2 oder 3,
**dadurch gekennzeichnet,**
**dass** die jeweilige erste Filtergruppe (8) im Reinigungsbetrieb beginnend mit einem jeweiligen Anfangszeitpunkt (t2, t4) bis zu einem jeweiligen Endzeitpunkt (t1, t3) mit dem Reinigungsgas (12) beaufschlagt wird und dass die Überwachungseinrichtung (17) den Startzeitpunkt (t5) und/oder den Stoppzeitpunkt (t6) anhand des Anfangszeitpunkts (t2) und/ oder des Endzeitpunkts (t3) der jeweiligen ersten Filtergruppe (8) ermittelt und/oder den Startzeitpunkt (t5) anhand des Endzeitpunkts (t1) der zuvor abgereinigten ersten Filtergruppe (8) und den Stoppzeitpunkt (t6) anhand des Anfangszeitpunkts (t4) der nachfolgend abgereinigten ersten Filtergruppe (8) ermittelt.

5. Überwachungsverfahren nach Anspruch 1,
**dadurch gekennzeichnet,**
- **dass** die Überwachungseinrichtung (17) den Zustand der jeweiligen ersten Filtergruppe (8) anhand eines Vergleichs des ermittelten Anteils (A) der durch den Reinigungsbetrieb der jeweiligen ersten Filtergruppe (8) bewirkten Belastung (B) des Abgases (2) mit Partikeln (3) an der Summe (BG) der durch den Reinigungsbetrieb aller ersten Filtergruppen (8) bewirkten Belastungen (B) des Abgases (2) mit Partikeln (3) mit einem Referenzanteil (R) ermittelt und
- **dass** die Überwachungseinrichtung (17) den Referenzanteil (R) bei der erstmaligen Ermittlung der Anteile (A) der durch den Reinigungsbetrieb der ersten Filtergruppen (8) bewirkten Belastungen (B) des Abgases (2) mit Partikeln (3) ermittelt.

6. Überwachungsverfahren nach einem der obigen Ansprüche,
**dadurch gekennzeichnet,**
- **dass** die ersten Filtergruppen (8) im Reinigungsbetrieb über das der jeweiligen ersten Filtergruppe (8) zugeordnete erste Ventil (13) aus einem den ersten Filtergruppen (8) gemeinsamen ersten Tank (15) mit dem Reinigungsgas (12) beaufschlagt werden,
- **dass** das Befreien eines zweiten Teils des Abgases (2) von den Partikeln (3) in einer Mehrzahl von zweiten Filtergruppen (8') erfolgt, die jeweils eine Anzahl an Filterschläuchen (7) aufweisen,
- **dass** in einem Reinigungsbetrieb der jeweiligen zweiten Filtergruppe (8') die Filterschläuche (7) der jeweiligen zweiten Filtergruppe (8') an der Abluftseite (10) über ein der jeweiligen zweiten Filtergruppe (8') zugeordnetes zweites Ventil (13') mit einem Reinigungsgas (12) beaufschlagt werden, so dass ein an der Zuluftseite (9) der Filterschläuche (7) der jeweiligen zweiten Filtergruppe (8') angelagerter Filterkuchen (11) sich von der Zuluftseite (9) der Filterschläuche (7) der jeweiligen zweiten Filtergruppe (8') löst,
- **dass** die zweiten Filtergruppen (8') im Reinigungsbetrieb über das der jeweiligen zweiten Filtergruppe (8') zugeordnete jeweilige zweite Ventil (13') aus einem den zweiten Filtergruppen (8') gemeinsamen zweiten Tank (15') mit dem Reinigungsgas (12) beaufschlagt werden und
- **dass** der zweite Tank (15') ein von dem ersten Tank (15) verschiedener Tank (15') ist.

7. Computerprogramm, das Maschinencode (19) umfasst, der von einer Überwachungseinrichtung (17) für eine Filtereinrichtung (5) abarbeitbar ist,
- wobei der Filtereinrichtung (5) über einen Zuluftkanal (4) ein mit Partikeln (3) belastetes Abgas (2) zugeführt wird, das Abgas (2) in der Filtereinrichtung (5) von den Partikeln (3) befreit wird und das von den Partikeln (3) befreite Abgas (2) von der Filtereinrichtung (5) über einen Abluftkanal (6) abgegeben wird,
- wobei das Befreien eines ersten Teils des Abgases (2) von den Partikeln (3) in einer Mehrzahl von ersten Filtergruppen (8) der Filtereinrichtung (5) erfolgt, die jeweils eine Anzahl an Filterschläuchen (7) aufweisen,
- wobei in einem Normalbetrieb der jeweiligen ersten Filtergruppe (8) das Abgas (2) an einer Zuluftseite (9) in die Filterschläuche (7) der jeweiligen ersten Filtergruppe (8) eintritt und an einer Abluftseite (10) aus den Filterschläuchen (7) der jeweiligen ersten Filtergruppe (8) austritt, so dass die Partikel (3) sich als Filterkuchen (11) an der Zuluftseite (9) der Filterschläuche (7) der jeweiligen ersten Filtergruppe (8) anlagern,
- wobei in einem Reinigungsbetrieb der jeweiligen ersten Filtergruppe (8) die Filterschläuche (7) der jeweiligen ersten Filtergruppe (8) an der Abluftseite (10) über ein der jeweiligen ersten Filtergruppe (8) zugeordnetes erstes Ventil (13) mit einem Reinigungsgas (12) beaufschlagt werden, so dass der an der Zuluftseite (9) der Filterschläuche (7) der jeweiligen ersten Filtergruppe (8) angelagerte Filterkuchen (11) sich von der Zuluftseite (9) der Filterschläuche (7) der jeweiligen ersten Filtergruppe (8) löst,
- wobei mittels einer im Abluftkanal (6) angeordneten Sensoreinrichtung (16) eine durch den Reinigungsbetrieb der jeweiligen ersten Filtergruppe (8) bewirkte Belastung (B) des Abgases (2) mit Partikeln (3) erfasst wird,
- wobei die Abarbeitung des Maschinencodes (19) durch die Überwachungseinrichtung (17) bewirkt, dass die Überwachungseinrichtung (17) von der Sensoreinrichtung (16) die durch den Reinigungsbetrieb der ersten Filtergruppen (8) bewirkten Belastungen (B) des Abgases (2) mit Partikeln (3) entgegennimmt und aufgrund der durch den Reinigungsbetrieb der jeweiligen ersten Filtergruppe (8) bewirkten Belastung (B) des Abgases (2) mit Partikeln (3) in Verbindung mit der durch den Reinigungsbetrieb mindestens einer weiteren ersten Filtergruppe (8) bewirkten Belastung (B) des Abgases (2) einen Zustand der jeweiligen ersten Filtergruppe (8) ermittelt,
- wobei die Abarbeitung des Maschinencodes (19) durch die Überwachungseinrichtung (17) bewirkt, dass die Überwachungseinrichtung (17) den Zustand der jeweiligen ersten Filtergruppe (8) anhand eines Anteils (A) der durch den Reinigungsbetrieb der jeweiligen ersten Filtergruppe (8) bewirkten Belastung (B) des Abgases (2) mit Partikeln (3) an der Summe (BG) der durch den Reinigungsbetrieb aller ersten Filtergruppen (8) bewirkten Belastungen (B) des Abgases (2) mit Partikeln (3) ermittelt.

8. Computerprogramm nach Anspruch 7,
**dadurch gekennzeichnet,**
**dass** die Abarbeitung des Maschinencodes (19) durch die Überwachungseinrichtung (17) bewirkt, dass die Überwachungseinrichtung (17) die durch den Reinigungsbetrieb der jeweiligen ersten Filtergruppe (8) bewirkte Belastung (B) des Abgases (2) mit Partikeln (3) zwischen einem für die jeweilige erste Filtergruppe (8) spezifischen Startzeitpunkt (t5) und einem für die jeweilige erste Filtergruppe (8) spezifischen Stoppzeitpunkt (t6) ermittelt.

9. Computerprogramm nach Anspruch 8,
**dadurch gekennzeichnet**,
die Abarbeitung des Maschinencodes (19) durch die Überwachungseinrichtung (17) bewirkt, dass die Überwachungseinrichtung (17) die durch den Reinigungsbetrieb der jeweiligen ersten Filtergruppe (8) bewirkte Belastung (B) des Abgases (2) mit Partikeln (3) als Gesamtbelastung (BW) vom jeweiligen Startzeitpunkt (t5) bis zum jeweiligen Stoppzeitpunkt (t6) ermittelt.

10. Computerprogramm nach Anspruch 8 oder 9,
**dadurch gekennzeichnet,**
**dass** die jeweilige erste Filtergruppe (8) im Reinigungsbetrieb beginnend mit einem jeweiligen Anfangszeitpunkt (t2, t4) bis zu einem jeweiligen Endzeitpunkt (t1, t3) mit dem Reinigungsgas (12) beaufschlagt wird und dass die Abarbeitung des Maschinencodes (19) durch die Überwachungseinrichtung (17) bewirkt, dass die Überwachungseinrichtung (17) den Startzeitpunkt (t5) und den Stoppzeitpunkt (t6) anhand des Anfangszeitpunkts (t2) und/oder des Endzeitpunkts (t3) der jeweiligen ersten Filtergruppe (8) ermittelt und/oder den Startzeitpunkt (t5) anhand des Endzeitpunkts (t1) der zuvor abgereinigten ersten Filtergruppe (8) und den Stoppzeitpunkt (t6) anhand des Anfangszeitpunkts (t4) der nachfolgend abgereinigten ersten Filtergruppe (8) ermittelt.

11. Computerprogramm nach Anspruch 7,
**dadurch gekennzeichnet**,
die Abarbeitung des Maschinencodes (19) durch die Überwachungseinrichtung (17) bewirkt, dass die Überwachungseinrichtung (17)
- den Zustand der jeweiligen ersten Filtergruppe (8) anhand eines Vergleichs des ermittelten Anteils (A) der durch den Reinigungsbetrieb der jeweiligen ersten Filtergruppe (8) bewirkten Belastung (B) des Abgases (2) mit Partikeln (3) an der Summe (BG) der durch den Reinigungsbetrieb aller ersten Filtergruppen (8) bewirkten Belastungen (B) des Abgases (2) mit Partikeln (3) mit einem Referenzanteil (R) ermittelt und
- den Referenzanteil (R) bei der erstmaligen Ermittlung der Anteile (A) der durch den Reinigungsbetrieb der ersten Filtergruppen (8) bewirkten Belastungen (B) des Abgases (2) mit Partikeln (3) ermittelt.

12. Überwachungseinrichtung für eine Filtereinrichtung (5), wobei die Überwachungseinrichtung (17) mit einem Computerprogramm (18) nach einem der Ansprüche 7 bis 11 programmiert ist.

13. Filtereinrichtung, in der ein mit Partikeln (3) belastetes Abgas (2) von den Partikeln (3) befreit wird,
- wobei die Filtereinrichtung einen Zuluftkanal (4) aufweist, über den das mit Partikeln (3) belastete Abgas (2) der Filtereinrichtung zugeführt wird, und einen Abluftkanal (6) aufweist, über den das von den Partikeln (3) befreite Abgas (2) von der Filtereinrichtung abgegeben wird,
- wobei die Filtereinrichtung eine Mehrzahl von ersten Filtergruppen (8) aufweist, in denen das Befreien eines ersten Teils des Abgases (2) von den Partikeln (3) erfolgt, wobei die ersten Filtergruppen (8) jeweils eine Anzahl an Filterschläuchen (7) aufweisen,
- wobei die Filterschläuche (7) jeweils eine Zuluftseite (9) und eine Abluftseite (10) aufweisen, so dass in einem Normalbetrieb der jeweiligen ersten Filtergruppe (8) das Abgas (2) an der Zuluftseite (9) in die Filterschläuche (7) der jeweiligen ersten Filtergruppe (8) eintritt und an der Abluftseite (10) aus den Filterschläuchen (7) der jeweiligen ersten Filtergruppe (8) austritt und die Partikel (3) sich als Filterkuchen (11) an der Zuluftseite (9) der Filterschläuche (7) der jeweiligen ersten Filtergruppe (8) anlagern,
- wobei den ersten Filtergruppe (8) jeweils ein erstes Ventil (13) zugeordnet ist, über das in einem Reinigungsbetrieb der jeweiligen ersten Filtergruppe (8) die Filterschläuche (7) der jeweiligen ersten Filtergruppe (8) an der Abluftseite (10) mit einem Reinigungsgas (12) beaufschlagt werden, so dass der an der Zuluftseite (9) der Filterschläuche (7) der jeweiligen ersten Filtergruppe (8) angelagerte Filterkuchen (11) sich von der Zuluftseite (9) der Filterschläuche (7) der jeweiligen ersten Filtergruppe (8) löst,
- wobei die Filtereinrichtung eine im Abluftkanal (6) angeordnete Sensoreinrichtung (16) aufweist, mittels derer eine durch den Reinigungsbetrieb der jeweiligen ersten Filtergruppe (8) bewirkte Belastung (B) des Abgases (2) mit Partikeln (3) erfasst wird, und
- wobei die Filtereinrichtung eine mit der Sensoreinrichtung (16) verbundene Überwachungseinrichtung (17) nach Anspruch 12 aufweist.

## Claims

1. Monitoring method for a filter installation (5),
- wherein the filter installation (5) by way of an intake air duct (4) is supplied an exhaust gas (2) that is loaded with particles (3), the exhaust gas (2) in the filter installation (5) is relieved of the particles (3), and the exhaust gas (2) relieved of the particles (3) is discharged by the filter installation (5) by way of an exhaust air duct (6),
- wherein relieving a first part of the exhaust gas (2) of the particles (3) is performed in a plurality of first filter groups (8) of the filter installation (5), which have in each case a number of filter sleeves (7),
- wherein the exhaust gas (2) in a normal operation of the respective first filter group (8) enters the filter sleeves (7) of the respective first filter group (8) at an intake air side (9) and exits the filter sleeves (7) of the respective first filter group (8) at an exhaust air side (10), such that the particles (3) as a filter cake (11) accumulate at the intake air side (9) of the filter sleeves (7) of the respective first filter group (8),
- wherein the filter sleeves (7) of the respective first filter group (8) at the exhaust air side (10) in a cleaning operation of the respective first filter group (8) by way of a first valve (13) that is assigned to the respective first filter group (8) are impinged with a cleaning gas (12), such that the filter cake (11) that has accumulated at the intake air side (9) of the filter sleeves (7) of the respective first filter group (8) is released from the intake air side (9) of the filter sleeves (7) of the respective first filter group (8),
- wherein a loading (B) of the exhaust gas (2) with particles (3) caused by the cleaning operation of the respective first filter group (8) is detected by means of a sensor installation (16) that is disposed in the exhaust air duct (6),
- wherein a monitoring installation (17) from the sensor installation (16) receives the loadings (B) of the exhaust gas (2) with particles (3) caused by the cleaning operation of the first filter groups (8) and by virtue of the loading (B) of the exhaust gas (2) with particles (3) caused by the cleaning operation of the respective first filter group (8), in conjunction with the loading (B) of the exhaust gas (2) caused by the cleaning operation of at least one further first filter group (8) determines a state of the respective first filter group (8), and
- wherein the monitoring installation (17) determines the state of the respective first filter group (8) by means of a proportion (A) of the loading (B) of the exhaust gas (2) with particles (3) caused by the cleaning operation of the respective first filter group (8) in the sum (BG) of the loadings (B) of the exhaust gas (2) with particles (3) caused by the cleaning operation of all first filter groups (8).

2. Monitoring method according to Claim 1, **characterized in that** the monitoring installation (17) determines the loading (B) of the exhaust gas (2) with particles (3) caused by the cleaning operation of the respective first filter group (8) between a starting temporal point (t5) that is specific to the respective first filter group (8) and a stopping temporal point (t6) that is specific to the respective first filter group (8).

3. Monitoring method according to Claim 2, **characterized in that** the monitoring installation (17) determines the loading (B) of the exhaust gas (2) with particles (3) caused by the cleaning operation of the respective first filter group (8) as total loading (BW) from the respective starting temporal point (t5) up to the respective stopping temporal point (t6).

4. Monitoring method according to Claim 2 or 3, **characterized in that** the respective first filter group (8) in the cleaning operation, starting with a respective initial temporal point (t2, t4) up to a respective final temporal point (t1, t3) is impinged with the cleaning gas (12), and **in that** the monitoring installation (17) determines the starting temporal point (t5) and/or the stopping temporal point (t6) by means of the initial temporal point (t2) and/or of the final temporal point (t3) of the respective first filter group (8), and/or determines the starting temporal point (t5) by means of the final temporal point (t1) of the previously cleaned first filter group (8) and determines the stopping temporal point (t6) by means of the initial temporal point (t4) of the subsequently cleaned first filter group (8).

5. Monitoring method according to Claim 1,
**characterized in that**
- the monitoring installation (17) determines the state of the respective first filter group (8) by means of a comparison of the determined proportion (A) of the loading (B) of the exhaust gas (2) with particles (3) caused by the cleaning operation of the respective first filter group (8) in the sum (BG) of the loadings (B) of the exhaust gas (2) with particles (3) caused by the cleaning operation of all first filter groups (8) with a reference proportion (R), and
- **in that** the monitoring installation (17) determines the reference proportion (R) in the initial determination of the proportions (A) of the loadings (B) of the exhaust gas (2) with particles (3) caused by the cleaning operation of the first filter groups (8).

6. Monitoring method according to one of the preceding claims, **characterized in that**
- the first filter groups (8) in the cleaning operation by way of the first valve (13) that is assigned to the respective first filter group (8) are impinged with the cleaning gas (12) from a first tank (15) that is common to the first filter groups (8),
- **in that** relieving a second part of the exhaust gas (2) of the particles (3) is performed in a plurality of second filter groups (8') which have in each case a number of filter sleeves (7),
- **in that** the filter sleeves (7) of the respective second filter group (8') at the exhaust air side (10) in a cleaning operation of the respective second filter group (8') by way of a second valve (13') that is assigned to the respective second filter group (8') are impinged with a cleaning gas (12), such that a filter cake (11) that has accumulated at the intake air side (9) of the filter sleeves (7) of the respective second filter group (8') is released from the intake air side (9) of the filter sleeves (7) of the respective second filter group (8'),
- **in that** the second filter groups (8') in the cleaning operation by way of the respective second valve (13') that is assigned to the respective second filter group (8') are impinged with the cleaning gas (12) from a second tank (15') that is common to the second filter groups (8'), and
- **in that** the second tank (15') is a tank (15') that is different from the first tank (15).

7. Computer program which comprises a machine code (19) which can be run by a monitoring installation (17) for a filter installation (5),
- wherein the filter installation (5) by way of an intake air duct (4) is supplied an exhaust gas (2) that is loaded with particles (3), the exhaust gas (2) in the filter installation (5) is relieved of the particles (3), and the exhaust gas (2) relieved of the particles (3) is discharged by the filter installation (5) by way of an exhaust air duct (6),
- wherein relieving a first part of the exhaust gas (2) of the particles (3) is performed in a plurality of first filter groups (8) of the filter installation (5), which have in each case a number of filter sleeves (7),
- wherein the exhaust gas (2) in a normal operation of the respective first filter group (8) enters the filter sleeves (7) of the respective first filter group (8) at an intake air side (9) and exits the filter sleeves (7) of the respective first filter group (8) at an exhaust air side (10), such that the particles (3) as a filter cake (11) accumulate at the intake air side (9) of the filter sleeves (7) of the respective first filter group (8),
- wherein the filter sleeves (7) of the respective first filter group (8) at the exhaust air side (10) in a cleaning operation of the respective first filter group (8) by way of a first valve (13) that is assigned to the respective first filter group (8) are impinged with a cleaning gas (12), such that the filter cake (11) that has accumulated at the intake air side (9) of the filter sleeves (7) of the respective first filter group (8) is released from the intake air side (9) of the filter sleeves (7) of the respective first filter group (8),
- wherein a loading (B) of the exhaust gas (2) with particles (3) caused by the cleaning operation of the respective first filter group (8) is detected by means of a sensor installation (16) that is disposed in the exhaust air duct (6), and
- wherein running the machine code (19) by the monitoring installation (17) causes the monitoring installation (17) to receive from the sensor installation (16) the loadings (B) of the exhaust gas (2) with particles (3) caused by the cleaning operation of the first filter groups (8) and by virtue of the loading (B) of the exhaust gas (2) with particles (3) caused by the cleaning operation of the respective first filter group (8), in conjunction with the loading (B) of the exhaust gas (2) caused by the cleaning operation of at least one further first filter group (8) determine a state of the respective first filter group (8),
- wherein running the machine code (19) by the monitoring installation (17) causes the monitoring installation (17) to determine the state of the respective first filter group (8) by means of a proportion (A) of the loading (B) of the exhaust gas (2) with particles (3) caused by the cleaning operation of the respective first filter group (8) in the sum (BG) of the loadings (B) of the exhaust gas (2) with particles (3) caused by the cleaning operation of all first filter groups (8).

8. Computer program according to Claim 7, **characterized in that** running the machine code (19) by the monitoring installation (17) causes the monitoring installation (17) to determine the loading (B) of the exhaust gas (2) with particles (3) caused by the cleaning operation of the respective first filter group (8) between a starting temporal point (t5) that is specific to the respective first filter group (8) and a stopping temporal point (t6) that is specific to the respective first filter group (8).

9. Computer program according to Claim 8, **characterized in that** running the machine code (19) by the monitoring installation (17) causes the monitoring installation (17) to determine the loading (B) of the exhaust gas (2) with particles (3) caused by the cleaning operation of the respective first filter group (8) as total loading (BW) from the respective starting temporal point (t5) up to the respective stopping temporal point (t6).

10. Computer program according to Claim 8 or 9, **characterized in that** the respective first filter group (8) in the cleaning operation, starting with a respective initial temporal point (t2, t4) up to a respective final temporal point (t1, t3) is impinged with the cleaning gas (12), and **in that** running the machine code (19) by the monitoring installation (17) causes the monitoring installation (17) to determine the starting temporal point (t5) and the stopping temporal point (t6) by means of the initial temporal point (t2) and/or of the final temporal point (t3) of the respective first filter group (8), and/or determine the starting temporal point (t5) by means of the final temporal point (t1) of the previously cleaned first filter group (8) and determine the stopping temporal point (t6) by means of the initial temporal point (t4) of the subsequently cleaned first filter group (8).

11. Computer program according to Claim 7, **characterized in that** running the machine code (19) by the monitoring installation (17) causes the monitoring installation (17)
- to determine the state of the respective first filter group (8) by means of a comparison of the determined proportion (A) of the loading (B) of the exhaust gas (2) with particles (3) caused by the cleaning operation of the respective first filter group (8) in the sum (BG) of the loadings (B) of the exhaust gas (2) with particles (3) caused by the cleaning operation of all first filter groups (8) with a reference proportion (R), and
- to determine the reference proportion (R) in the initial determination of the proportions (A) of the loadings (B) of the exhaust gas (2) with particles (3) caused by the cleaning operation of the first filter groups (8).

12. Monitoring installation for a filter installation (5), wherein the monitoring installation (17) is programmed with a computer program (18) according to one of Claims 7 to 11.

13. Filter installation in which an exhaust gas (2) that is loaded with particles (3) is relieved of the particles (3),
- wherein the filter installation has an intake air duct (4) by way of which the exhaust gas (2) that is loaded with the particles (3) is supplied to the filter installation, and has an exhaust air duct (6) by way of which the exhaust gas (2) that is relieved of the particles (3) is discharged by the filter installation,
- wherein the filter installation has a plurality of first filter groups (8) in which relieving a first part of the exhaust gas (2) of the particles (3) is performed, wherein the first filter groups (8) have in each case a number of filter sleeves (7),
- wherein the filter sleeves (7) have in each case one intake air side (9) and one exhaust air side (10), such that the exhaust gas (2) in a normal operation of the respective first filter group (8) enters the filter sleeves (7) of the respective first filter group (8) at the intake air side (9) and exits the filter sleeves (7) of the respective first filter group (8) at the exhaust air side (10), and the particles (3) as a filter cake (11) accumulate at the intake air side (9) of the filter sleeves (7) of the respective first filter group (8),
- wherein a first valve (13) is in each case assigned to the first filter group (8) by way of which the filter sleeves (7) of the respective first filter group (8) at the exhaust air side (10) in a cleaning operation of the respective first filter group (8) are impinged with a cleaning gas (12), such that the filter cake (11) that has accumulated at the intake air side (9) of the filter sleeves (7) of the respective first filter group (8) is released from the intake air side (9) of the filter sleeves (7) of the respective first filter group (8),
- wherein the filter installation has a sensor installation (16) that is disposed in the exhaust air duct (6), by means of which sensor installation (16) a loading (B) of the exhaust gas (2) with particles (3) caused by the cleaning operation of the respective first filter group (8) is detected, and
- wherein the filter installation has a monitoring installation (17) according to Claim 12 that is connected to the sensor installation (16).

## Revendications

1. Procédé de surveillance pour un dispositif de filtration (5),
- dans lequel un gaz d'échappement (2) chargé en particules (3) est introduit dans le dispositif de filtration (5) par l'intermédiaire d'un canal d'admission d'air (4), le gaz d'échappement (2) est libéré des particules (3) dans le dispositif de filtration (5) et le gaz d'échappement (2) libéré des particules (3) est distribué par le dispositif de filtration (5) par l'intermédiaire d'un canal d'évacuation d'air (6),
- dans lequel la libération d'une première partie du gaz d'échappement (2) des particules (3) s'effectue dans une pluralité de premiers groupes de filtration (8) du dispositif de filtration (5), lesquels comprennent respectivement un certain nombre de manchons de filtration (7),
- dans lequel, dans un fonctionnement normal du premier groupe de filtration (8) respectif, le gaz d'échappement (2) entre dans les manchons de filtration (7) du premier groupe de filtration (8) respectif par un côté admission d'air (9) et sort des manchons de filtration (7) du premier groupe de filtration (8) respectif par un côté évacuation d'air (10), de telle sorte que les particules (3) se déposent sous forme de gâteau de filtration (11) sur le côté admission d'air (9) des manchons de filtration (7) du premier groupe de filtration (8) respectif,
- dans lequel, dans un fonctionnement de nettoyage du premier groupe de filtration (8) respectif, les manchons de filtration (7) du premier groupe de filtration (8) respectif sont exposés à un gaz de nettoyage (12) au niveau du côté évacuation d'air (10) par l'intermédiaire d'une première soupape (13) associée au premier groupe de filtration (8) respectif, de telle sorte que le gâteau de filtration (11) déposé sur le côté admission d'air (9) des manchons de filtration (7) du premier groupe de filtration (8) respectif se dissocie du côté admission d'air (9) des manchons de filtration (7) du premier groupe de filtration (8) respectif,
- dans lequel une charge (B) du gaz d'échappement (2) en particules (3) engendrée par le fonctionnement de nettoyage du premier groupe de filtration (8) respectif est détectée au moyen d'un dispositif de détection (16) disposé dans le canal d'évacuation d'air (6),
- dans lequel un dispositif de surveillance (17) reçoit du dispositif de détection (16) les charges (B) du gaz d'échappement (2) en particules (3) engendrées par le fonctionnement de nettoyage des premiers groupes de filtration (8) et détermine sur la base de la charge (B) du gaz d'échappement (2) en particules (3) engendrée par le fonctionnement de nettoyage du premier groupe de filtration (8) respectif en rapport avec la charge (B) du gaz d'échappement (2) engendrée par le fonctionnement de nettoyage d'au moins un autre premier groupe de filtration (8) un état du premier groupe de filtration (8) respectif et
- dans lequel le dispositif de surveillance (17) détermine l'état du premier groupe de filtration (8) respectif à l'aide d'un rapport (A) de la charge (B) du gaz d'échappement (2) en particules (3) engendrée par le fonctionnement de nettoyage du premier groupe de filtration (8) respectif à la somme (BG) des charges (B) du gaz d'échappement (2) en particules (3) engendrées par le fonctionnement de nettoyage de tous les premiers groupes de filtration (8).

2. Procédé de surveillance selon la revendication 1,
**caractérisé**
**en ce que** le dispositif de surveillance (17) détermine la charge (B) du gaz d'échappement (2) en particules (3) engendrée par le fonctionnement de nettoyage du premier groupe de filtration (8) respectif entre un instant de démarrage (t5) spécifique au premier groupe de filtration (8) respectif et un instant d'arrêt (t6) spécifique au premier groupe de filtration (8) respectif.

3. Procédé de surveillance selon la revendication 2,
**caractérisé**
**en ce que** le dispositif de surveillance (17) détermine la charge (B) du gaz d'échappement (2) en particules (3) engendrée par le fonctionnement de nettoyage du premier groupe de filtration (8) respectif sous forme de charge globale (BW) depuis l'instant de démarrage (t5) respectif jusqu'à l'instant d'arrêt (t6) respectif.

4. Procédé de surveillance selon la revendication 2 ou la revendication 3,
**caractérisé**
**en ce que** le premier groupe de filtration (8) respectif est exposé au gaz de nettoyage (12) dans le fonctionnement de nettoyage commençant par un instant de début (t2, t4) respectif jusqu'à un instant de fin (t1, t3) respectif et **en ce que** le dispositif de surveillance (17) détermine l'instant de démarrage (t5) et/ou l'instant d'arrêt (t6) à l'aide de l'instant de début (t2) et/ou de l'instant de fin (t3) du premier groupe de filtration (8) respectif et/ou détermine l'instant de démarrage (t5) à l'aide de l'instant de fin (t1) du premier groupe de filtration (8) précédemment nettoyé et l'instant d'arrêt (t6) à l'aide de l'instant de début (t4) du premier groupe de filtration (8) nettoyé ensuite.

5. Procédé de surveillance selon la revendication 1,
**caractérisé**
- **en ce que** le dispositif de surveillance (17) détermine l'état du premier groupe de filtration (8) respectif à l'aide d'une comparaison du rapport (A) déterminé de la charge (B) du gaz d'échappement (2) en particules (3) engendrée par le fonctionnement de nettoyage du premier groupe de filtration (8) respectif à la somme (BG) des charges (B) du gaz d'échappement (2) en particules (3) engendrées par le fonctionnement de nettoyage de tous les premiers groupes de filtration (8) avec un rapport de référence (R) et
- **en ce que** le dispositif de surveillance (17) détermine le rapport de référence (R) lors de la détermination initiale des rapports (A) des charges (B) du gaz d'échappement (2) en particules (3) engendrées par le fonctionnement de nettoyage des premiers groupes de filtration (8).

6. Procédé de surveillance selon l'une des revendications précédentes,
**caractérisé**
- **en ce que** les premiers groupes de filtration (8) sont exposés au gaz de nettoyage (12) dans le fonctionnement de nettoyage par l'intermédiaire de la première soupape (13) associée au premier groupe de filtration (8) respectif à partir d'un premier réservoir (15) commun aux premiers groupes de filtration (8),
- **en ce que** la libération d'une deuxième partie du gaz d'échappement (2) des particules (3) s'effectue dans une pluralité de deuxièmes groupes de filtration (8'), lesquels comprennent un certain nombre de manchons de filtration (7),
- **en ce que**, dans un fonctionnement de nettoyage du deuxième groupe de filtration (8') respectif, les manchons de filtration (7) du deuxième groupe de filtration (8') respectif sont exposés à un gaz de nettoyage (12) au niveau du côté évacuation d'air (10) par l'intermédiaire d'une deuxième soupape (13') associée au deuxième groupe de filtration (8') respectif, de telle sorte qu'un gâteau de filtration (11) déposé sur le côté admission d'air (9) des manchons de filtration (7) du deuxième groupe de filtration (8') respectif se dissocie du côté admission d'air (9) des manchons de filtration (7) du deuxième groupe de filtration (8') respectif,
- **en ce que** les deuxièmes groupes de filtration (8') sont exposés au gaz de nettoyage (12) dans le fonctionnement de nettoyage par l'intermédiaire de la deuxième soupape (13') respective associée au deuxième groupe de filtration (8') respectif à partir d'un deuxième réservoir (15') commun aux deuxièmes groupes de filtration (8') et
- **en ce que** le deuxième réservoir (15') est un réservoir (15') différent du premier réservoir (15).

7. Programme informatique, qui comporte un code machine (19), lequel est exécutable par un dispositif de surveillance (17) pour un dispositif de filtration (5),
- dans lequel un gaz d'échappement (2) chargé en particules (3) est introduit dans le dispositif de filtration (5) par l'intermédiaire d'un canal d'admission d'air (4), le gaz d'échappement (2) est libéré des particules (3) dans le dispositif de filtration (5) et le gaz d'échappement (2) libéré des particules (3) est distribué par le dispositif de filtration (5) par l'intermédiaire d'un canal d'évacuation d'air (6),
- dans lequel la libération d'une première partie du gaz d'échappement (2) des particules (3) s'effectue dans une pluralité de premiers groupes de filtration (8) du dispositif de filtration (5), lesquels comprennent respectivement un certain nombre de manchons de filtration (7),
- dans lequel, dans un fonctionnement normal du premier groupe de filtration (8) respectif, le gaz d'échappement (2) entre dans les manchons de filtration (7) du premier groupe de filtration (8) respectif par un côté admission d'air (9) et sort des manchons de filtration (7) du premier groupe de filtration (8) respectif par un côté évacuation d'air (10), de telle sorte que les particules (3) se déposent sous forme de gâteau de filtration (11) sur le côté admission d'air (9) des manchons de filtration (7) du premier groupe de filtration (8) respectif,
- dans lequel, dans un fonctionnement de nettoyage du premier groupe de filtration (8) respectif, les manchons de filtration (7) du premier groupe de filtration (8) respectif sont exposés à un gaz de nettoyage (12) au niveau du côté évacuation d'air (10) par l'intermédiaire d'une première soupape (13) associée au premier groupe de filtration (8) respectif, de telle sorte que le gâteau de filtration (11) déposé sur le côté admission d'air (9) des manchons de filtration (7) du premier groupe de filtration (8) respectif se dissocie du côté admission d'air (9) des manchons de filtration (7) du premier groupe de filtration (8) respectif,
- dans lequel une charge (B) du gaz d'échappement (2) en particules (3) engendrée par le fonctionnement de nettoyage du premier groupe de filtration (8) respectif est détectée au moyen d'un dispositif de détection (16) disposé dans le canal d'évacuation d'air (6),
- dans lequel l'exécution du code machine (19) par le dispositif de surveillance (17) a pour conséquence que le dispositif de surveillance (17) reçoit du dispositif de détection (16) les charges (B) du gaz d'échappement (2) en particules (3) engendrées par le fonctionnement de nettoyage des premiers groupes de filtration (8) et détermine sur la base de la charge (B) du gaz d'échappement (2) en particules (3) engendrée par le fonctionnement de nettoyage du premier groupe de filtration (8) respectif en rapport avec la charge (B) du gaz d'échappement (2) engendrée par le fonctionnement de nettoyage d'au moins un autre premier groupe de filtration (8) un état du premier groupe de filtration (8) respectif,
- dans lequel l'exécution du code machine (19) par le dispositif de surveillance (17) a pour conséquence que le dispositif de surveillance (17) détermine l'état du premier groupe de filtration (8) respectif à l'aide d'un rapport (A) de la charge (B) du gaz d'échappement (2) en particules (3) engendrée par le fonctionnement de nettoyage du premier groupe de filtration (8) respectif à la somme (BG) des charges (B) du gaz d'échappement (2) en particules (3) engendrées par le fonctionnement de nettoyage de tous les premiers groupes de filtration (8).

8. Programme informatique selon la revendication 7,
**caractérisé**
**en ce que** l'exécution du code machine (19) par le dispositif de surveillance (17) a pour conséquence que le dispositif de surveillance (17) détermine la charge (B) du gaz d'échappement (2) en particules (3) engendrée par le fonctionnement de nettoyage du premier groupe de filtration (8) respectif entre un instant de démarrage (t5) spécifique au premier groupe de filtration (8) respectif et un instant d'arrêt (t6) spécifique au premier groupe de filtration (8) respectif.

9. Programme informatique selon la revendication 8,
**caractérisé**
**en ce que** l'exécution du code machine (19) par le dispositif de surveillance (17) a pour conséquence que le dispositif de surveillance (17) détermine la charge (B) du gaz d'échappement (2) en particules (3) engendrée par le fonctionnement de nettoyage du premier groupe de filtration (8) respectif sous forme de charge globale (BW) depuis l'instant de démarrage (t5) respectif jusqu'à l'instant d'arrêt (t6) respectif.

10. Programme informatique selon la revendication 8 ou la revendication 9,
**caractérisé**
**en ce que** le premier groupe de filtration (8) respectif est exposé au gaz de nettoyage (12) dans le fonctionnement de nettoyage commençant par un instant de début (t2, t4) respectif jusqu'à un instant de fin (t1, t3) respectif et **en ce que** l'exécution du code machine (19) par le dispositif de surveillance (17) a pour conséquence que le dispositif de surveillance (17) détermine l'instant de démarrage (t5) et l'instant d'arrêt (t6) à l'aide de l'instant de début (t2) et/ou de l'instant de fin (t3) du premier groupe de filtration (8) respectif et/ou détermine l'instant de démarrage (t5) à l'aide de l'instant de fin (t1) du premier groupe de filtration (8) précédemment nettoyé et l'instant d'arrêt (t6) à l'aide de l'instant de début (t4) du premier groupe de filtration (8) nettoyé ensuite.

11. Programme informatique selon la revendication 7,
**caractérisé**
**en ce que** l'exécution du code machine (19) par le dispositif de surveillance (17) a pour conséquence que le dispositif de surveillance (17)
- détermine l'état du premier groupe de filtration (8) respectif à l'aide d'une comparaison du rapport (A) déterminé de la charge (B) du gaz d'échappement (2) en particules (3) engendrée par le fonctionnement de nettoyage du premier groupe de filtration (8) respectif à la somme (BG) des charges (B) du gaz d'échappement (2) en particules (3) engendrées par le fonctionnement de nettoyage de tous les premiers groupes de filtration (8) avec un rapport de référence (R) et
- détermine le rapport de référence (R) lors de la détermination initiale des rapports (A) des charges (B) du gaz d'échappement (2) en particules (3) engendrées par le fonctionnement de nettoyage des premiers groupes de filtration (8).

12. Dispositif de surveillance pour un dispositif de filtration (5), le dispositif de surveillance (17) étant programmé par un programme informatique (18) selon l'une des revendications 7 à 11.

13. Dispositif de filtration, dans lequel un gaz d'échappement (2) chargé en particules (3) est libéré des particules (3),
- le dispositif de filtration comprenant un canal d'admission d'air (4), par l'intermédiaire duquel le gaz d'échappement (2) chargé en particules (3) est introduit dans le dispositif de filtration, et un canal d'évacuation d'air (6), par l'intermédiaire duquel le gaz d'échappement (2) libéré des particules (3) est distribué par le dispositif de filtration,
- le dispositif de filtration comprenant une pluralité de premiers groupes de filtration (8), dans lesquels s'effectue la libération d'une première partie du gaz d'échappement (2) des particules (3), les premiers groupes de filtration (8) comprenant respectivement un certain nombre de manchons de filtration (7),
- les manchons de filtration (7) comprenant respectivement un côté admission d'air (9) et un côté évacuation d'air (10), de telle sorte que, dans un fonctionnement normal du premier groupe de filtration (8) respectif, le gaz d'échappement (2) entre dans les manchons de filtration (7) du premier groupe de filtration (8) respectif par le côté admission d'air (9) et sorte des manchons de filtration (7) du premier groupe de filtration (8) respectif par le côté évacuation d'air (10), et les particules (3) se déposent sous forme de gâteau de filtration (11) sur le côté admission d'air (9) des manchons de filtration (7) du premier groupe de filtration (8) respectif,
- une première soupape (13) étant respectivement associée au premier groupe de filtration (8), par l'intermédiaire de laquelle, dans un fonctionnement de nettoyage du premier groupe de filtration (8) respectif, les manchons de filtration (7) du premier groupe de filtration (8) respectif sont exposés à un gaz de nettoyage (12) au niveau du côté évacuation d'air (10), de telle sorte que le gâteau de filtration (11) déposé sur le côté admission d'air (9) des manchons de filtration (7) du premier groupe de filtration (8) respectif se dissocie du côté admission d'air (9) des manchons de filtration (7) du premier groupe de filtration (8) respectif,
- le dispositif de filtration comprenant un dispositif de détection (16) disposé dans le canal d'évacuation d'air (6), au moyen duquel est détectée une charge (B) du gaz d'échappement (2) en particules (3) engendrée par le fonctionnement de nettoyage du premier groupe de filtration (8) respectif, et
- le dispositif de filtration comprenant un dispositif de surveillance (17) selon la revendication 12 relié au dispositif de détection (16).
